# EUROPEAN PATENT SPECIFICATION

(11) **EP 4 209 674 B1**
(45) Date of publication and mention of the grant of the patent: **07.01.2026**
(21) Application number: 21868322.5
(22) Date of filing: 05.08.2021
(51) Int. Cl.: F01C 1/344, F01C 21/08, F03C 2/30, F03B 3/12, F03B 3/10

(54) **SPLIT-TYPE BLADE, FLUID DRIVE DEVICE AND FLUID DRIVE PROPORTIONAL MIXER**
GETEILTE SCHAUFEL, FLUIDANTRIEBSVORRICHTUNG UND PROPORTIONALMISCHER FÜR FLUIDANTRIEB
PALE DE TYPE FENDU, DISPOSITIF D'ENTRAÎNEMENT DE FLUIDE ET MÉLANGEUR PROPORTIONNEL D'ENTRAÎNEMENT DE FLUIDE

(30) Priority: 18.09.2020 CN 202010984748
(43) Date of publication of application: 12.07.2023
(73) Proprietor: Ningbo Forward Fire Technology Co., Ltd., Ningbo, Zhejiang 315801 (CN)
(72) Inventor: LU, Zhigang, Shanghai 201807 (CN); LU, Xubin, Ningbo, Zhejiang 315801 (CN)
(74) Representative: Wang, Bo
(86) International application number: PCT/CN2021/110814
(87) International publication number: WO 2022/057493

(56) References cited:
- WO-A1-2013/124968
- WO-A1-2020/040461
- CN-A- 104 696 139
- CN-A- 111 271 206
- CN-U- 202 031 765
- CN-U- 210 422 860
- CN-Y- 2 128 979
- CN-Y- 2 379 622
- DE-A1- 2 938 870

## Description

### TECHNICAL FIELD

The present application relates to a field of fluid driving technology and in particular, relates to a split-type blade, a fluid driving device and a fluid driving proportional mixer.

### BACKGROUND ART

The fluid driving device, such as a hydraulic motor, serving as an energy conversion device to converse the pressure energy of the fluid into the mechanical energy, is widely used in various fields like industry, agriculture, and fire protection. The hydraulic motor on the current market generally includes a housing, a stator and a rotor, in which the stator is fixedly connected in the housing, and the blade slidable in the radial direction is provided in the rotor. However, the rotor is eccentrically arranged in the chamber of the stator. When the blade drives the rotor to rotate under the effect of the extinguishing water, the blade is slid along the radial direction of the rotor, so that the end surface of the blade directly abuts against the wall of inner chamber the stator.

The current hydraulic motor generally adopts the traditional blade, in which one end of the traditional blade can be slidably inserted in the rotor along the radial direction, so that the other end of the traditional blade is slid to abut against the wall of the inner chamber of the stator under the effect of the centrifugal force. However, the traditional blade is generally adapted to the hydraulic motor with a higher rotation speed. Due to the low rotation speed, the centrifugal force is too small to cause the sliding of the traditional blade, resulting in a relatively large gap between the traditional blade and the stator, so as to lead to a serious leakage that influences the normal operation of the hydraulic motor.

In order to solve the above problem, some of the hydraulic motors are additionally equipped with a spring structure, so that the traditional blade can abut against the inner wall of the rotor by using the elastic force in a low rotation speed. However, the spring structure has a large stroke, so as to result in a relatively large spring compression force. Therefore, the applied force between the traditional blade and the stator is relatively large, causing a serious abrasion between the traditional blade and the stator and a large noise, which may greatly reduce the service life of the hydraulic motor.

Furthermore, some of the hydraulic motors directly remove the traditional blade and adopt the integrated penetrating blade with an integral structure. The integrated penetrating blade is penetrating provided in the rotor, and the integrated penetrating blade can slide along the radial direction of the rotor, so that two end portions of the integrated penetrating blade abut against the inner wall of the stator throughout in any rotation speed, and the integrated penetrating blade is slid on the inner wall of the stator. However, since the integrated penetrating blade is an integration, which is difficult to have a high flatness. The integrated penetrating blade can slidably penetrate the rotor, so that there is a relatively large gap between the integrated penetrating blade and the rotor, causing a serious abrasion between the contacting surfaces thereof, which will lead to a serious leakage problem.

CN2379622Y describes a two-stage vane pump, which comprises a pump body, a pump cover, a main shaft, a rotor and a stator, wherein, the pump body is also provided with a side plate, a thermal insulation chamber and a safe-reflux load balance valve device. The rotor is provided with rotor vanes without tilt angle, and the inner end of the symmetrical vanes is provided with a slidable push rod. The utility model has the advantages of strong applicability and stable operation and can effectively convey viscous medium.

### SUMMARY

The invention is set out in the appended set of claims.

The further purposes and advantages of the present application can be fully described in combination with the explanation of the following description and drawings.

The above and other purposes, features and advantages of the present application are fully described via the following detailed description, drawings and claims.

### BRIEF DESCRIPTION OF THE DRAWINGS

FIG.1 is a perspective schematic diagram of a fluid driving device according to an embodiment of the present application.
FIG.2 illustrates an explosion schematic diagram of a fluid driving device according to an embodiment of the present application.

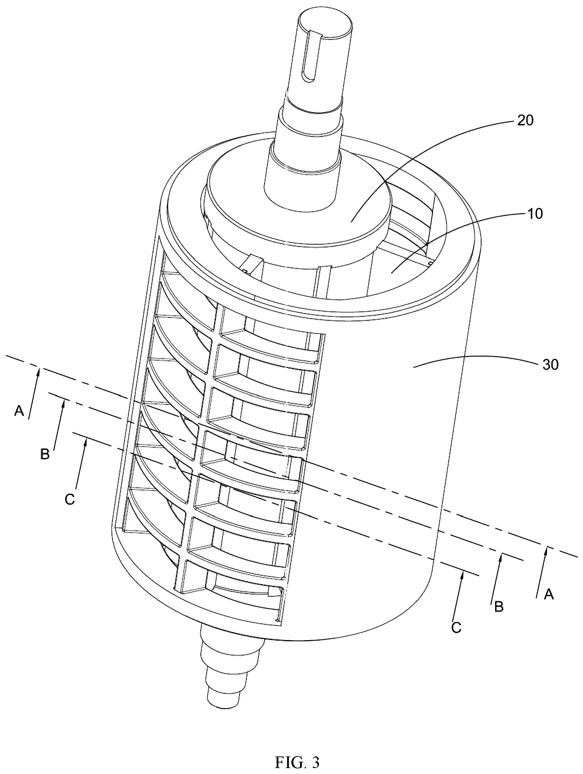

FIG.3 illustrates a perspective schematic diagram of inner components of a fluid driving device according to an embodiment of the present application.
FIG.s 4A-4C respectively illustrate section schematic diagrams of inner components of a fluid driving device according to an embodiment of the present application.

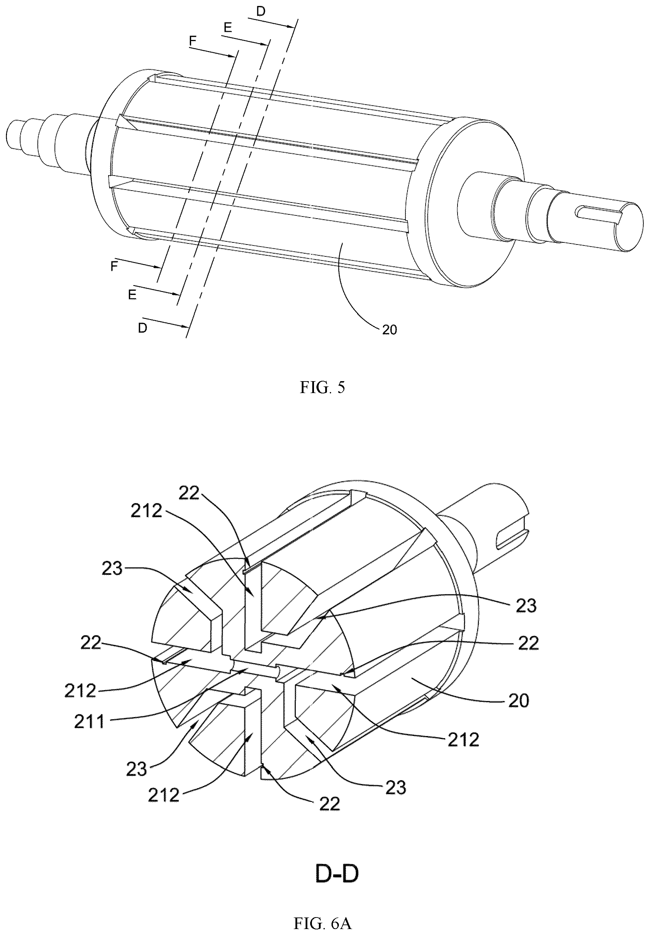

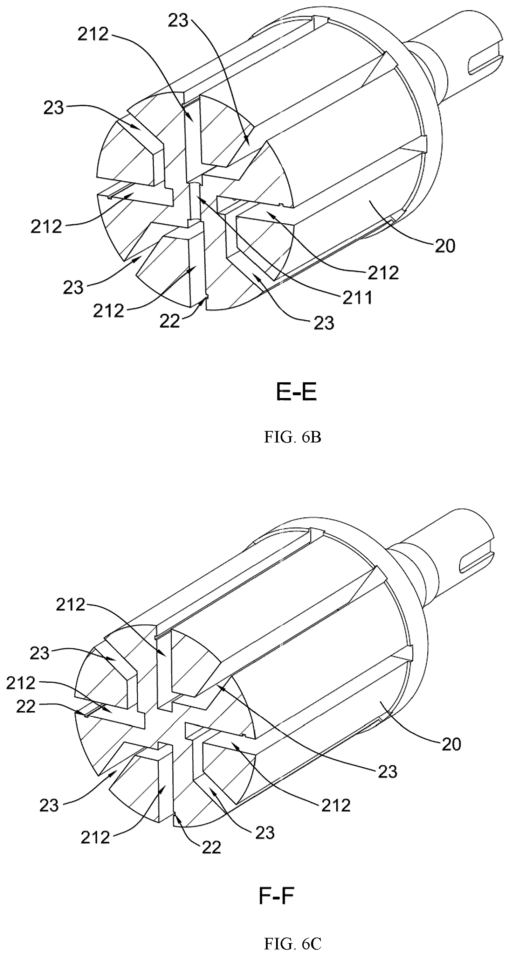

FIG.5 illustrates a perspective schematic diagram of a rotor in a fluid driving device according to an embodiment of the present application.
FIG.s 6A-6C respectively illustrate section schematic diagrams of a rotor of a fluid driving device according to an embodiment of the present application.
FIG.7 illustrates a working principle schematic diagram of a fluid driving device according to an embodiment of the present application.
FIG.8 illustrates a perspective schematic diagram of a split-type blade of a fluid driving device according to an embodiment of the present disclosure, which is considered as useful for understanding the invention.
FIG.s 9A and 9B illustrate an exemplary split-type blade according to an embodiment of the present disclosure, which is considered as useful for understanding the invention.
FIG.10 illustrates a first transformation technical solution of a split-type blade according to an embodiment of the present disclosure, which is considered as useful for understanding the invention.
FIG.s 11A and 11B illustrate a second transformation technical solution of a split-type blade according to an embodiment of the present application.
FIG.s 12A and 12B illustrate a third transformation technical solution of a split-type blade according to an embodiment of the present application.
FIG.s 13-16 illustrate application examples of a third transformation technical solution of a split-type blade according to the present application.

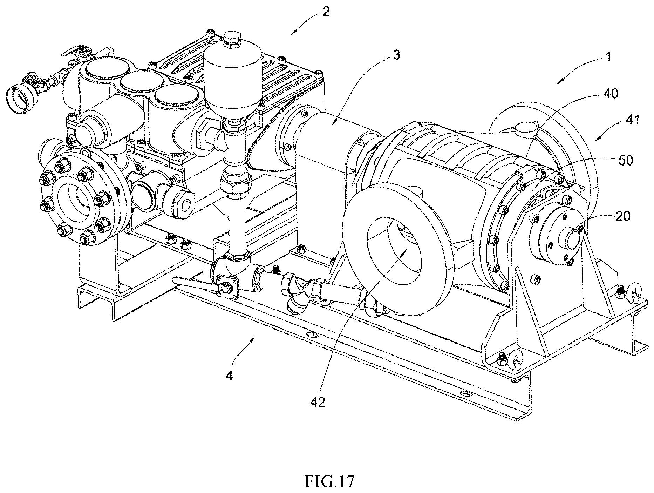

FIG.17 illustrates a structural schematic diagram of a fluid driving proportional mixer according to an embodiment of the present application.

### DETAILED DESCRIPTION

The following description discloses the present application, so that those skilled in the art can realize the present application. The preferred embodiments described below are only examples. It is easy for those skilled in the art to make other obvious transformations. The basic principle of the present application defined in the following description can be applied to other implementation solutions, transformation solutions, improved solutions, equivalent solutions and other technical solutions without deviating from the spirit and scope of the present application.

Those skilled in the art should understand that the terms for indicating the orientations or position relationships such as "longitudinal", "transverse" "above" "below", "front", "rear", "left", "right", "vertical", "horizontal", "top", "bottom", "inner" and "outer" are based on the orientations or position relationships indicated in the drawings, which is intended to facilitate describing and simplify the description, but not intended to indicate or imply that the device or element must has a specific direction, or be constructed and operated in a specific direction. Therefore, the above terms cannot be understood as the limitation of the present application.

In the present application, the term "a" in the claims and specification should be understood as "one or more", that is, the number of the element can be one in an embodiment, and can be more than one in other embodiments. Unless the disclosure of the present application clearly indicates that the number of the element is only one, the term "a" cannot be understood as unique or single, and the term "a" cannot be understood as a limitation on the number.

In the description of the present application, it should be understood that the terms such as "first" and "second" are only for describing, rather than intended to indicate or imply the importance. In the description of the present application, it should be noted that, the terms "connect" and "connection" should be understood in a broad sense, unless there is other definition and limitation. For example, the connection can be a fixed connection, a detachable connection or integrated connection; the connection can be a mechanical connection or an electrical connection; and the connection can be a direct connection or an indirect connection via medium. For those skilled in the art, the detail meanings of the above terms in the present application can be understood according to the specific situations.

In the description of the present application, the reference terms "an embodiment", "some embodiments", "example", "specific example" or "some examples" mean that the specific feature, structure, material or characteristic illustrated in this embodiment or example is included in at least one embodiments or examples of the present application. In the specification of the present application, the exemplary expression of the above terms does not have to refer to the same embodiment or example. In addition, the specific features, structures, materials or characteristics can be combined in a suitable manner in any one or more embodiments or examples. Without contradiction, those skilled in the art can combine different embodiments or examples described in this specification with the features in different embodiments or examples.

At present, the blade of the current hydraulic motor is either a traditional blade that is radially retractable on the rotor, or an integrated penetrating blade that is radially slidable on the rotor. However, the traditional blade has a problem that it cannot be operated in a low rotation speed. The integrated penetrating blade results in a large leakage and abrasion between the blade and the rotor due to the low flatness and deformable capacity. Therefore, the present application provides a split-type blade, to solve the problem that the traditional blade cannot be operated in a low rotation speed, and solve the problem of serious leakage and abrasion between the integrated penetrating blade and the rotor.

Referring to FIG.s 1-9B, a split-type blade in an embodiment of the present application is described. The split-type blade 10 serves as an accessory of a fluid driving device 1 and is mounted in a rotor 20 of the fluid driving device 1, so as to converse the pressure energy of the fluid into the mechanical energy. The split-type blade 10 includes a pushing rod 11 and two valve plates 12. The pushing rod 11 is configured to be slidably disposed in the rotor 20 of the fluid driving device 1 along a radial direction. Two valve plates 12 are respectively mounted on two end portions of the pushing rod 11 in parallel. Each of two valve plates 12 is extended outwards along the pushing rod 11 to form the split-type blade 10 with a penetrating pushing rod structure. When the split-type blade 10 drives the rotor 20 to rotate under the effect of the fluid, the pushing rod 11 of the split-type blade 10 slides along a radial direction of the rotor 20 to ensure an outer edge portion of each valve plate 12 abuts against an inner wall 31 of a stator 30 of the fluid driving device 1 throughout. It should be understood that the fluid adopted in the fluid driving device 1 can be but not limited to liquid water such as extinguishing water, river water or sea water. It can also be implemented as other types of fluids such as solution, air, and so on.

It should be noted that, compared with the traditional blade, the split-type blade 10 in the present application penetrates the rotor 20 through the pushing rod 11, so that the split-type blade 10 can be operated in any rotation speed, which solves the problem that the traditional blade cannot be operated in a low rotation speed. Compared with the integrated penetrating blade, each valve plate 12 of the split-type blade 10 in the present application has a greatly smaller dimension than the integrated penetrating blade. The valve plate 12 has a high flatness even adopts the same sheet material of the integrated penetrating blade, which can reduce the risk of deformation of valve plate 12, facilitating reducing the abrasion between the valve plate 12 of the split-type blade 10 and the rotor 20, so as to improve the service life of the split-type blade 10.

In detail, in the above embodiment of the present application, the pushing rod 11 and the valve plate 12 of the split-type blade 10 are made of different materials. The material strength of the pushing rod 11 is larger than a material strength of the valve plate 12, so that the whole structure of the split-type blade 10 has a sufficient strength. The section area of the pushing rod 11 is greatly smaller than the section area of the valve plate 12, greatly reducing the contacting area between the pushing rod 11 and the rotor 20, further to reduce the abrasion between the pushing rod 11 of the split-type blade 10 and the rotor 20, and improve the service life of the split-type blade 10. It should be understood that the existing integrated penetrating blade is generally made of the plastic sheet material. Therefore, the section area of the connection portion of the integrated penetrating blade cannot be too small, instead, the section area should be as large as possible to ensure a sufficient strength of the integrated penetrating blade, resulting in a larger contacting area between the integrated penetrating blade and the rotor. Which may not only increase the abrasion, but also lead to a serious leakage.

Preferably, the pushing rod 11 of the split-type blade 10 can be made of metal material such as stainless steel, carbon steel or alloy, facilitating the surface precision of the pushing rod 11, which greatly reduces the gap between the pushing rod 11 and the rotor 20, further to reduce the leakage between the split-type blade 10 and the rotor 20. It should be understood that the rotor 20 is generally made of metal material such as stainless steel. The matching degree between the rotor 20 and the pushing rod 11 can be improved by improving the machining accuracy, so as to greatly reduce the gap therebetween and further to reduce the leakage.

It should be noted that the valve plate 12 of the split-type blade 10 can be made of plastic or resin material such as PVDF (Polyvinylidene Difluoride) or PVC (Polyvinyl Chloride), so as to reduce the abrasion and noise when the valve plate 12 slides on the inner wall 31 of the stator 30. Certainly, in other embodiments of the present application, the valve plate 12 of the split-type blade 10 can be made of other nonmetal material, which won't be repeatedly described.

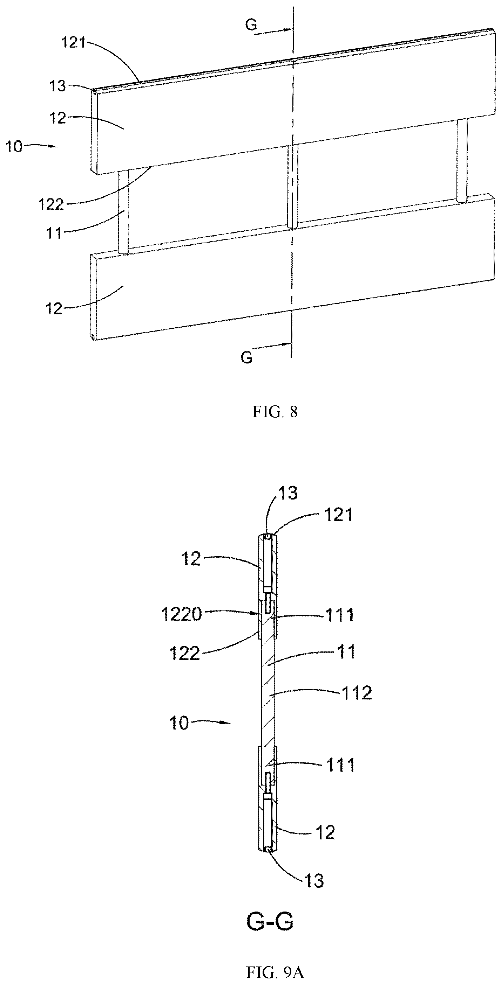

As an example, according to the above embodiment of the present application and referring to FIG.8, the split-type blade 10 includes three pushing rods 11 and two valve plates 12. Three pushing rods 11 are equally disposed at an interval. Two end portions 111 of each pushing rod 11 are respectively connected to the inner edge portions 122 of two valve plates 12, to form the split-type blade 10 with split-type pushing rod structure. Two valve plates 12 are supportably connected to each other by three pushing rods 11, so that the whole structure of the split-type blade 10 has a sufficient strength, preventing the split-type blade 10 from deforming, which facilitates improving the quality and the service life of the split-type blade 10.

It should be noted that, the split-type blade 10 in FIG.s 1-8 and the following description takes three pushing rods 11 as an example to explain the characteristics and advantages of the split-type blade 10. Those skilled in the art should understand that specific structure of the split-type blade 10 disclosed in FIG.s 1-8 and the following description is only for illustrations, which is not intended to limit the content and scope of the present application. For example, in other embodiments, the split-type blade 10 can includes one, two or more than three pushing rods 11 according to the different demand.

Specifically, in one embodiment of the present application, referring to FIG.s 9A and 9B, the valve plate 12 of the split-type blade 10 can be detachably mounted in the end portion 111 of the pushing rod 11 to facilitate maintaining and replacing the split-type blade 10.

More specifically, referring to FIG.s 9A and 9B, a matching groove 1220 is provided in the inner edge portion 122 of the valve plate 12 of the split-type blade 10. The end portion 111 of the pushing rod 11 can be inserted in the matching groove 1220 of the inner edge portion 122 of the valve plate 12, so as to realize the connection between the valve plate 12 and the pushing rod 11.

Exemplarily, referring to FIG.9A, the pushing rod 11 of the split-type blade 10 is flexibly connected to the valve plate 12. For example, the pushing rod 11 is connected to the valve plate 12 via a fastening member 151 (such as screw). A screw-matching head is provided in the end portion 111 of the pushing rod 11 of the split-type blade 10, and a screw-matching groove is provided in the inner edge portion 122 of the valve plate 12 of the split-type blade 10. The screw-matching head of the end portion 111 of the pushing rod 11 is inserted in the screw-matching groove of the inner edge portion 122 of the valve plate 12. The valve plate 12 can be flexibly connected to the end portion 111 of the pushing rod 11 via a screw.

It should be noted that the pushing rod 11 is flexibly connected to the valve plate 12 via a spring in another embodiment. specifically, the split-type blade 10 further includes one or more miniature springs. Each of the miniature springs is supported and connected between the pushing rod 11 and the valve plate 12, so as to realize a free retraction fine adjustment of the valve plate 12 by the miniature spring.

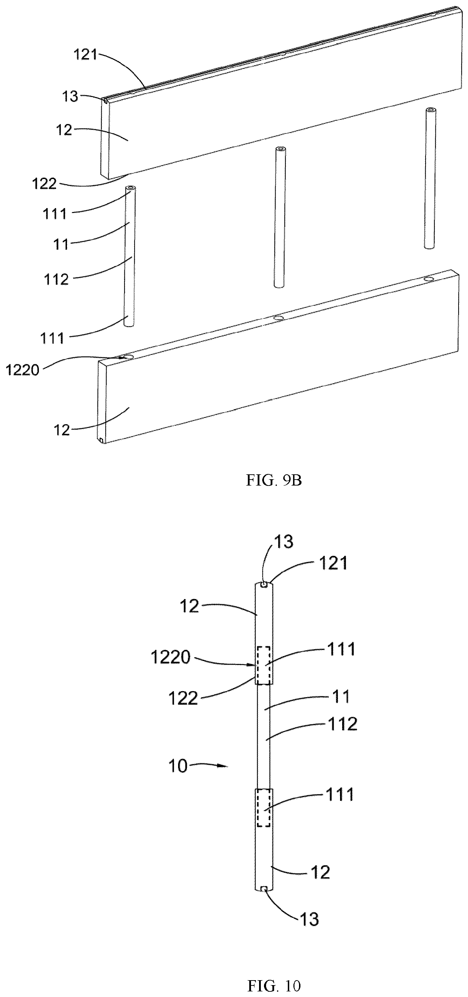

Certainly, in other embodiments of the present application, the pushing rod 11 of the split-type blade 10 is rigidly connected to the valve plate 12, that is, the pushing rod 11 and the valve plate 12 are in a tight fit (interference fit). For example, referring to FIG.10, a first transformation technical solution of the split-type blade 10 is described. Specifically, an interference-matching head is provided in the end portion 111 of the pushing rod 11 of the split-type blade 10, and an interference-matching groove is provided in the inner edge portion 122 of the valve plate 12 of the split-type blade 10. The interference-matching head of the end portion 111 of the pushing rod 11 is inserted in the interference-matching groove of the inner edge portion 122 of the valve plate 12, so that the valve plate 12 is rigidly connected to the end portion 111 of the pushing rod 11.

Preferably, referring to FIG.8 and FIG.9B, the pushing rod 11 of the split-type blade 10 has a circular section area, so as to maximally reduce the external surface area with the sufficient strength of the pushing rod 11, which maximally reduce the contacting area between the pushing rod 11 and the rotor 20, further to reduce the abrasion and leakage between the pushing rod 11 and the rotor 20. Certainly, in other embodiments of the present application, the pushing rod 11 can also have a section area in a ellipse shape or a oblong shape, which won't be repeatedly described.

Exemplarily, the pushing rod 11 of the split-type blade 10 includes two end portions 111 and a middle portion 112 integrated with two end portion 111. The middle portion 112 has a same circular section with the end portion 111. The middle portion 112 of the pushing rod 11 is extended from one end portion 111 of the pushing rod 11 to another end portion 111 of the pushing rod 11 in a same cross section, so as to form the cylindrical pushing rod 11.

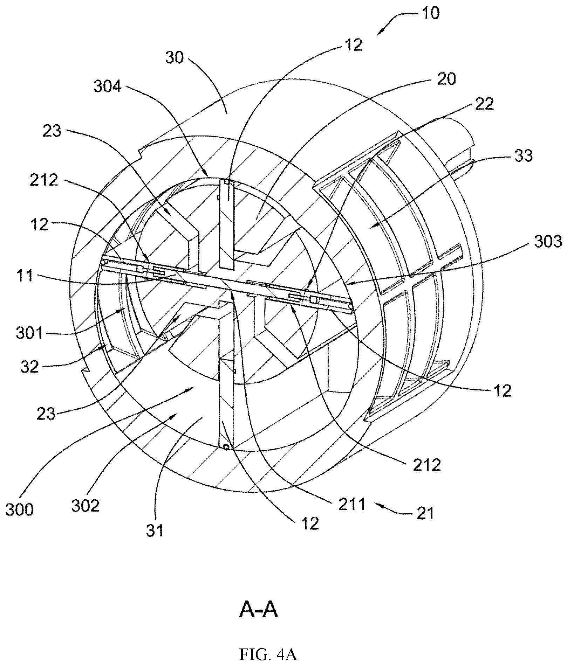

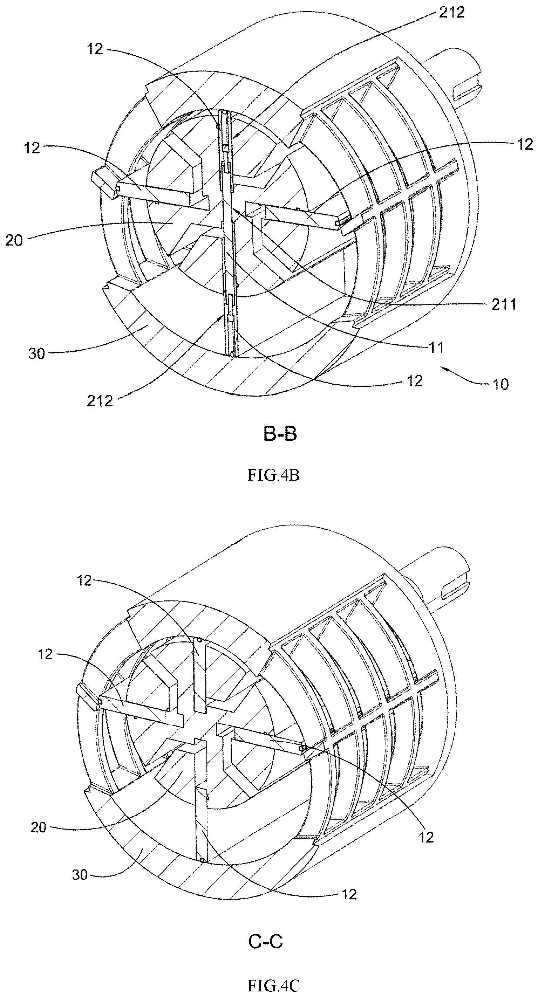

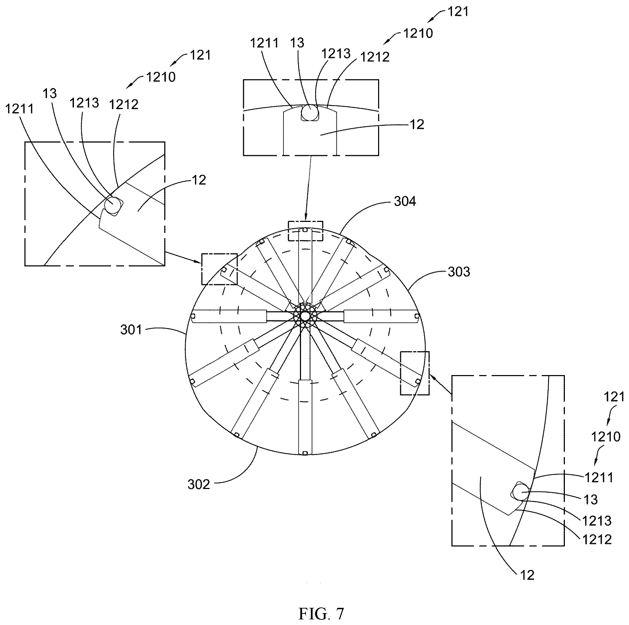

It should be noted that, referring to FIG.4A and FIG.7, the stator 30 of the fluid driving device 1 is divided into an inlet area 301, a positive displacement area 302, an outlet area 303 and a negative displacement area 304 along the rotation direction of the rotor 12 (anticlockwise direction in FIG.7). The envelope curves of the inner wall 31 of the stator 30 in the positive displacement area 302 and the negative displacement area 304 are configured as concentric arc curves. The envelope curve of the inner wall 31 of the stator 30 in the positive displacement area 302 has a larger curvature radius than the envelope curve in the negative displacement area 304. In addition, the envelope curves of the inner wall 31 of the stator 30 are configured as a transmission curve, such as arc curve, Archimedean spiral line, Pascal spiral curve, logarithmic equation curve or other plane curves, so that an inner chamber 300 with a non-circular structure is formed in the stator 30.

Preferably, referring to FIG.7, the outer edge portion 121 of the valve plate 12 of the split-type blade 10 has an arc end surface 1210. The arc end surface 1210 of the valve plate 12 has an arc structure with hyperbolic radius. When the valve plate 12 of the split-type blade 10 slides in the positive displacement area 302 or the negative displacement area 304 of the inner wall 31 of the stator 30, the arc portion of the arc end surface 1210 of the valve plate 12 with a larger radius abuts against the inner wall 31 of the stator 30. When the valve plate 12 of the split-type blade 10 slides in the inlet area 301 or the outlet area 303 of the inner wall 31 of the stator 30, the arc portion of the arc end surface 1210 of the valve plate 12 with a smaller radius abuts against the inner wall 31 of the stator 30, which facilitates reducing the abrasion between the valve plate 12 of the split-type blade 10 and the stator 30.

Preferably, the arc portion in the arc end surface 1210 of the valve plate 12 of the split-type blade 10 with a larger curvature radius has a same curvature with the envelope curve of the inner wall 31 of the stator 30 in the negative displacement area 304. The valve plate 12 of the split-type blade 10 is in a surface connection with the inner wall 31 of the stator 30 in the negative displacement area 304, so as to better guide the valve plate 12 of the split-type blade 10 to slide along the inner wall 31 of the stator 30, reduce the gap between the valve plate 12 of the split-type blade 10 and the inner wall 31 of the stator 30 in the negative displacement area 304, further to reduce the leakage.

Exemplarily, as shown in FIG.7, the arc end surface 1210 of the valve plate 12 of the split-type blade 10 includes a front end surface 1211, a rear end surface 1212 and a middle end surface 1213 positioned between the front end surface 1211 and the rear end surface 1212. The front end surface 1211 of the valve plate 12 faces the rotation direction of the rotor 20, and the rear end surface 1212 of the valve plate 12 is back to the rotation direction of the rotor 20. The front end surface 1211 has a same curvature radius with the rear end surface 1212, and has a smaller curvature radius than the middle end surface 1213. The middle end surface 1213 has a same curvature radius with the envelope curve of the inner wall 31 of the stator 30 in the negative displacement area 304. It should be understood that the rotation direction of the rotor 20 in the present application is configured to a direction from the rear end surface 1212 of the valve plate 12 to the front end surface 1211 of the valve plate 12.

When the outer edge portion 121 of the valve plate 12 of the split-type blade 10 is positioned in the inlet area 301 of the stator 30, the rear end surface 1212 of the valve plate 12 abuts against the inner wall 31 of the stator 30. When the outer edge portion 121 of the valve plate 12 of the split-type blade 10 is positioned in the outlet area 303 of the stator 30, the front end surface 1211 of the valve plate 12 abuts against the inner wall 31 of the stator 30. When the outer edge portion 121 of the valve plate 12 of the split-type blade 10 is positioned in the positive displacement area 302 and the negative displacement area 304 of the stator 30, the middle end surface 1213 of the valve plate 12 abuts against the inner wall 31 of the stator 30. The contact position between the valve plate 12 of the split-type blade 10 and the rotor 20 are changed in different areas of the stator 30, which is conductive to reduce the abrasion of the split-type blade 10, improve the service life of the fluid driving device 1. It should be understood that, the front end surface 1211 and the rear end surface 1212 of the valve plate 12 have relatively smaller curvature radius. Therefore, the gap between the valve plate 12 and the inner wall 31 of the stator 30 in the inlet area 301 and the outlet area 303 is relatively large, the contact area is relatively small, greatly reducing the abrasion between the split-type blade 10 and the stator 30. Since the middle end surface 1213 of the valve plate 12 has a relatively large curvature radius, the gap between the valve plate 12 and the inner wall 31 of the stator 30 in the positive displacement area 302 and the negative displacement area 304 is relatively small, and the contact area is relatively large, which is conductive to guide the split-type blade 10 to slide along the inner wall 31 of the stator 30, and to reduce the leakage of the fluid driving device 1.

It should be noted that, in other embodiments of the present application, the arc end surface 1210 of the valve plate 12 of the split-type blade 10 has an arc structure with single curvature radius. The curvature radius of the arc end surface 1210 is preferred to be equal to the curvature radius of the envelope curve of the inner wall 31 of the stator 30 in the negative displacement area 304. That is, the front end surface 1211, the rear end surface 1212 and the middle end surface 1213 of the arc end surface 1210 of the valve plate 12 have the same curvature radius, which is equal to the curvature radius of the envelope curve of the inner wall 31 of the stator 30 in the negative displacement area 304.

In addition, the envelop curves of the stator in the positive displacement area 302 and the negative displacement area 304 are arc curves. The split-type blade 10 doesn't have a swing angle when sliding in the positive displacement area 302 and the negative displacement area 304 of the stator 30, so that the contact position between the split-type blade 10 and the stator 30 in the positive displacement area 302 and the negative displacement area 304 is throughout in the middle end surface 1213 of the valve plate 12 of the split-type blade 10, resulting in a serious abrasion of the middle end surface 1213 of the outer edge portion 121 of the valve plate 12 of the split-type blade 10, causing a leakage of the fluid driving device 1 and a loss of the pressure energy of the fluid.

Therefore, in the above embodiment of the present application, the split-type blade 10 further includes at least two elastic members 13, as shown in FIG.7 and FIG.8. Each of the elastic members 13 is correspondingly disposed in the middle end surface 1213 of the outer edge portion 121 of the valve plate 12, so that the elastic member 13 is positioned between the valve plate 12 and the inner wall 31 of the stator 30 when the valve plate 12 of the split-type blade 10 is in the positive displacement area 302 and the negative displacement area 304 of the stator, playing a sealing role. In other words, the elastic member 13 can seal the gap between the split-type blade 10 and the stator 30, preventing the fluid directly flowing from the inlet area 301 of the stator 30 to the outlet area 303 of the stator 30, effectively reducing the leakage and abrasion of the fluid driving device 1, and reducing the loss of the fluid pressure energy as possible. It should be understood that the elastic member 13 can be made of elastic material such as rubber, plastic, polymer material, metal materials and so on, but not limited thereto. The elastic member 13 can be implemented as the elastic member like elastic strip, O-ring, round gasket, arc strip, T-shaped strip, that can have a sealing effect to reduce the leakage, which won't be repeatedly described.

It should be noted that, in the above embodiment of the present application, the inner edge portion 122 of the valve plate 12 is provided with a matching groove 1220 at the connection position to the pushing rod 11, in order to mount the valve plate 12 on the end portion 111 of the pushing rod 11, which facilitates connecting to the end portion 111 of the pushing rod 11 in an inserting manner. However, the existence of the matching groove 1220 will weaken the strength of the connection portion between the inner edge portion 122 of the valve plate 12 and the pushing rod 11, resulting in a deformation or break of the valve plate 12 at this position, further influencing the property and service life of the split-type blade 10. Therefore, the present application can increase the strength of the connection position between the valve plate 12 and the pushing rod 11, so as to improve the whole strength of the split-type blade 10.

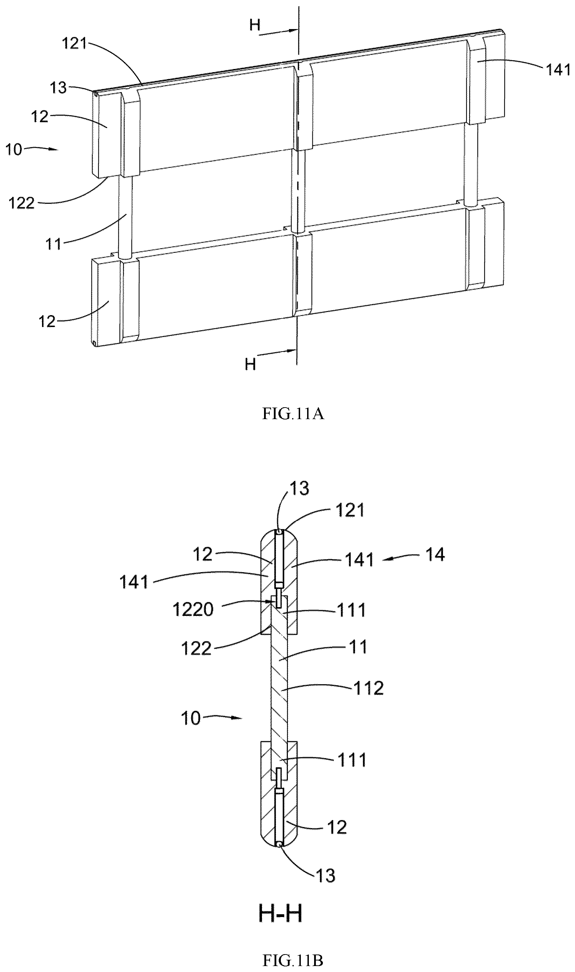

Specifically, as shown in FIG.11A and FIG.11B, a second transformation technical solution of the split-type blade 10 according to the above embodiment of the present application is explained. The split-type blade 10 in this transformation solution differs from the above embodiments in that: the split-type blade 10 further includes one or more reinforcing element 14. The reinforcing element 14 is correspondingly disposed in the connection position between the valve plate 12 and the pushing rod 11, so as to reinforce the connection strength between the valve plate 12 and the pushing rod 11, increasing the whole strength of the split-type blade 10. In other words, the reinforcing element 14 is arranged on the external side of the matching groove 1220 of the valve plate 12, to increase the structural strength of the valve plate 12 at the matching groove 1220.

More specifically, as shown in FIG.11A and FIG.11B, the reinforcing element 14 of the split-type blade 10 is configured as two reinforced ribs 141. Two reinforced ribs 141 are symmetrically disposed on the front and rear sides of the matching groove 1220 of the valve plate 12. Each reinforced rib 141 is extended from the inner edge portion 122 of the valve plate 12 to the outer edge portion 121 of the valve plate 12, so as to reinforce the whole strength of the valve plate 12, preventing the valve plate 12 from deforming or breaking.

Preferably, as shown in FIG.11B, the reinforced rib 141 is integrated and extended outwards from the valve plate 12 to increase the wall thickness of the matching groove 1220, so as to reinforce the strength of the valve plate 12 at the matching groove 1220.

Certainly, in other embodiments of the present application, the reinforcing element 14 of the split-type blade 10 is configured as one reinforced rib 141. The reinforced rib 141 is correspondingly disposed on the front or rear side of the matching groove 1220 of the valve plate 12, having a reinforcing effect on the valve plate 12. However, when the reinforced rib 141 is only provided on one side of the matching groove 1220 of the valve plate 12, the other side of the matching groove 1220 of the valve plate 12 cannot be reinforced, which is easy to break.

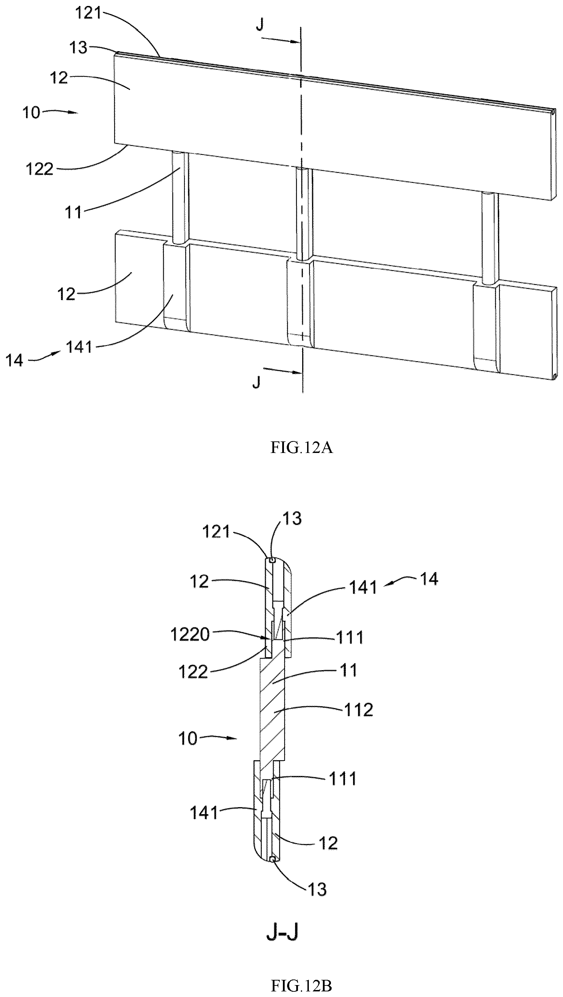

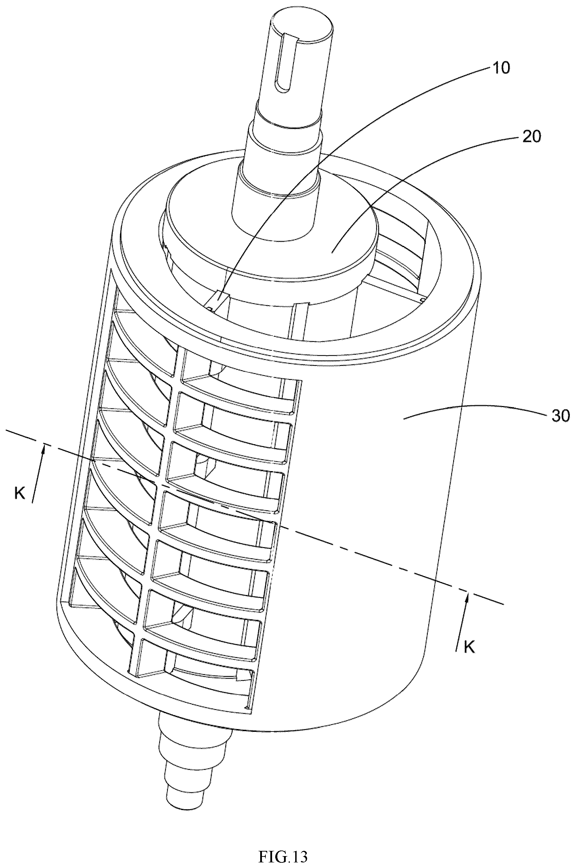

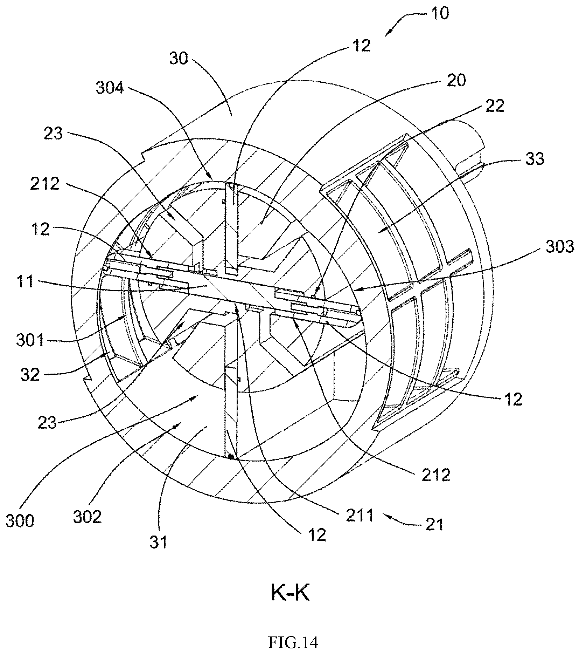

Further, as shown in FIG.12A and FIG.12B, a third transformation technical solution of the split-type blade 10 according to the above embodiment of the present application is explained. The split-type blade 10 in this transformation solution differs from the second transformation solution in that: the reinforcing element 14 of the split-type blade 10 is configured as one reinforced rib 141 arranged at the rear side surface of the valve plate 12. The matching groove 1220 of the valve plate 12 is backwards and eccentrically disposed in the inner edge portion 122 of the valve plate 12, so that the matching groove 1220 is positioned at the connection position between the inner edge portion 122 of the valve plate 12 and the reinforced rib 141, increasing the wall thickness of the matching groove 1220, so as to realize the whole reinforcement effect on the valve plate 12 by one reinforced rib 141.

It should be noted that the matching groove of each valve plate 12 is backwards shifted, so that the center point of the matching groove 1220 will deviate from the center axis of the split-type blade 10. Therefore, the end portion 111 of the pushing rod 11 of the split-type blade 10 backwards deviates from the center axis of the split-type blade 10, to align with the matching groove 1220, so that the centerlines of two end portions 111 of the pushing rod 11 are not in the same line.

Preferably, as shown in FIG.12B, the middle portion 112 of the pushing rod 11 of the split-type blade 10 has a larger section area than the end portion 111 of the pushing rod 11. Two end portions 111 of the pushing rod 11 are respectively extended outwards from two opposite ends of the middle portion 112 along the centerline of the middle portion 112, so that two end portions 111 of the pushing rod 11 are respectively shifted towards the rear side surface of the corresponding valve plates 12. Certainly, in other embodiments of the present application, the middle portion 112 of the pushing rod 11 has the same section area with the end portion 111 of the pushing rod 11. The middle portion 112 of the pushing rod 11 is inclined or bent from one end portion 111 of the pushing rod 11 to the other end portion 111, which won't be repeatedly described.

According to another aspect of the present application, the present application provides a fluid driving device 1, for converting the pressure energy of the fluid into the mechanical energy. In particular, as shown in FIG.s 1-9B, the fluid driving device 1 includes at least one stator 30, at least one rotor 20 and at least two above split-type blades 10. Each rotor 20 is provided with an inner chamber 300m and each rotor 20 is rotatably arranged in the inner chamber 300 of the corresponding stator 30. Each split-type blade 10 is slidably mounted in the rotor along the radial direction. The split-type blade 10 includes one or more pushing rods 11 and two valve plates 12. Each pushing rod 11 is configured to slidably penetrate the rotor 20 along the radial direction. Two valve plates 12 are respectively mounted on two end portions 111 of each pushing rod 11 in parallel. Each valve plate 12 is extended outwards along the pushing rod, to form the split-type blade 10 with penetrating pushing rod. When the split-type blade 10 drives the rotor 20 to rotate under the effect of the fluid, each pushing rod 11 of the split-type blade 10 slide along the radial direction of the rotor 20 to ensure an outer edge portion 121 of each valve plate 12 abuts against the inner wall 31 of the stator 30 throughout.

More specifically, as shown in FIG.s 4A-4C, the rotor 20 of the fluid driving device 1 is provided with at least two penetrating through holes 21. Each penetrating through hole 21 is extended along the radial direction of the rotor 20 to penetrate the rotor 20, for being slidably mounted in the split-type blade 10, so that the split-type blade 10 can slide in the penetrating through hole 21 in the radial direction, ensuring the sliding of the outer edge portion 121 of the valve plate 12 of the split-type blade 10 on the inner wall 31 of the stator 30. It should be noted that, the at least two penetrating through holes 21 are preferred to be equally spaced in the rotor 20, so that the valve plates 12 of the split-type blade 10 mounted in the penetrating through holes 21 have a same distance therebetween, further to ensure the stable operation of the fluid driving device 1.

Preferably, as shown in FIG.s 6A-6C, each penetrating through hole 21 of the rotor 20 includes one or more sliding holes 211 and two retracting grooves 212. Two retracting grooves 212 are symmetrically provided on a periphery of the rotor 20. The sliding hole 211 is extended from one retracting groove 212 to another retracting groove 212, to communicate two retracting grooves 212, so as to form the penetrating through hole 21 penetrating the rotor 20. In other words, when the split-type blade 10 is mounted in the penetrating through hole 21 of the rotor 20, the pushing rod 11 of the split-type blade 10 is slidably mounted in the sliding hole 211 of the rotor 20, and the valve plate 12 of the split-type blade 10 is retractably mounted in the retracting groove 212 of the rotor 20, so that the split-type blade 10 can be slidably mounted in the penetrating through hole 21 of the rotor 20. When the rotor 20 rotates relative to the stator 30, the pushing rod 11 of the split-type blade 10 slides in the sliding hole 211 of the rotor 20 along the radial direction. The valve plate 12 of the split-type blade 10 is extended out or retracted in the retracting groove 212, so as to ensuring the sliding of the outer edge portion 121 of the valve plate 12 of the split-type blade 10 on the inner wall 31 of the stator 30.

Further, as shown in FIG.s 4AA-4C, the rotor 20 of the fluid driving device 1 is further provided with two pairs of sealing grooves 22. Two sealing grooves 22 in each pair are respectively disposed on sidewalls (such as front sidewall) of two retracting grooves 212 of the corresponding penetrating through hole 21, which is configured to accommodation the sealing member (not shown in the figures). The sealing member seals the gap between the valve plate 12 of the split-type blade 10 and the rotor 20, to reduce the leakage of the fluid driving device 1.

Furthermore, the rotor 20 of the fluid driving device 1 includes one or more bush (not shown in the figures). The bush is configured to be mounted in the sliding hole 211 of the penetrating through hole 21 of the rotor 20. The bush is arranged around the pushing rod 11 of the split-type blade 10, so as to greatly reduce the gap between the pushing rod 11 and the rotor 20, preventing the fluid from leaking from the gap between the pushing rod 11 of the split-type blade 10 and the rotor 20, minimizing the leakage of the fluid driving device 1.

It should be noted that, the split-type blade 10 slides in the radial direction only in the inlet area 301 and the outlet area 303, while doesn't slide in the radial direction in the positive displacement area 302 and the negative displacement area 304. Therefore, only the split-type blade 10 sliding in the inlet area 301 and the outlet area 303 of the stator 30 will abuts against the rotor 20 to cause the abrasion. In the inlet area 301 and the outlet area 303, the front and rear sides of the valve plate 12 of the split-type blade 10 have a large pressure differential, which may aggravate the abrasion between the split-type blade 10 and the rotor 20.

In order to solve the problem, in the above embodiments of the present application, as shown in FIG.s 4A-6C, the rotor 20 of the fluid driving device 1 is further provided with a plurality of the balance holes 23. Each balance hole 23 is positioned between the adjacent retracting grooves 212, and is communicated with the corresponding retracting groove 212. When the valve plate 12 of the split-type blade 10 slides to the inlet area 301 and the outlet area 303 of the stator 30, the balance hole 23 is configured to introduce fluid in the retracting groove 212 to balance the pressure differential of the valve plate 12 along the radial direction. The pressures on two sides of the split-type blade 10 are in a balance status in the inlet area 301 and the outlet area 303, so as to reduce the abrasion between the split-type blade 10 and the rotor 20.

Exemplarily, as shown in FIG.s 4A-4C, the rotor 20 of the fluid driving device 1 is provided with four balance holes 23. Each balance hole 23 is communicated with a bottom of the retracting groove 212 that positioned in front of the balance hole 23, so that the balance hole 23 introduces the fluid in the rear side of the valve plate 12 of the split-type blade 10 in the retracting groove 212, and fluid pressure is introduced from the front and rear sides of the valve plate 12 of the split-type blade 10, which facilitates balancing the pressure differential between the front and rear sides of the split-type blade 10, reducing the abrasion, and improving the service life of the split-type blade 10 and even the whole fluid driving device 1. Certainly, in other embodiments of the present application, the balance hole 23 can be communicated with the retracting groove 212 at other positions, as long as the communication position is positioned on the inner side of the sealing groove 22 of the retracting groove 212 (i.e., the connection position between the balance hole 23 and the retracting groove 212 is closer to the center axis of the rotor 20 than the sealing groove 22), so as to ensure pressure differential balance on front and rear sides of the valve plate 12 of the split-type blade 10 under the sealing effect of the sealing groove 22, which won't be repeatedly described.

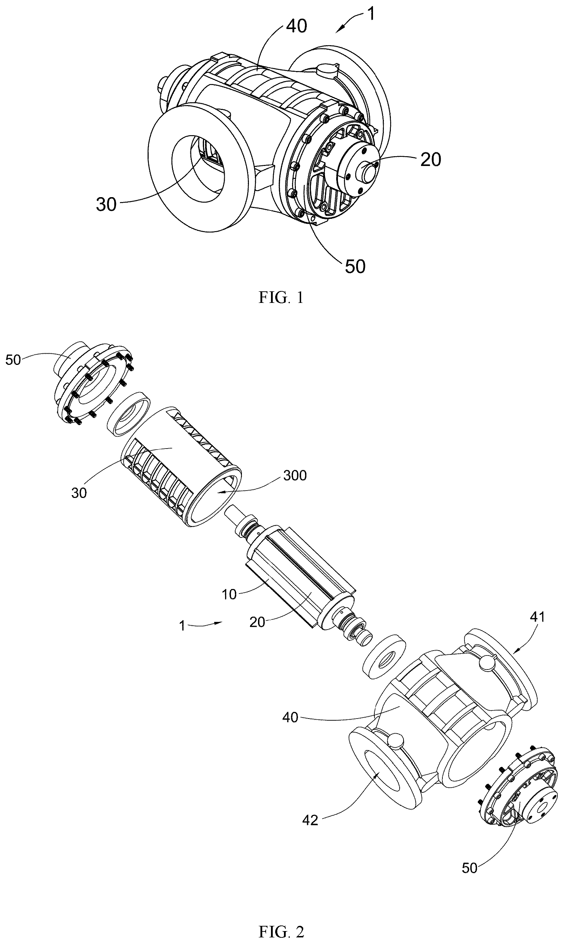

According to the above embodiments of the present application, as shown in FIG.1 and FIG.2, the fluid driving device 1 further includes a housing 40 and two end plates 50. The housing 40 is provided with an inlet tube 41 for introducing the fluid and an outlet tube 42 for discharging the fluid. The stator 30 is fixedly arranged in the housing 40. The rotor 20 is rotatably mounted in the housing 40 via the end plate 50. The inlet tube 41 of the housing 40 is corresponding to the inlet 32 of the stator 30 and the outlet tube 42 is corresponding to the outlet 33 of the stator, so that the fluid flows from the inlet tube 41 of the housing 40 in the inner chamber 300 of the stator through the inlet 32 of the stator 30, and further flows out of the outlet tube 42 of the housing 40 through the outlet 33 of the stator 30. At the same time, the fluid drives the split-type blade to rotate, further drives the rotor 20 to rotate, so as to partly converse the pressure energy of the fluid into the mechanical energy. The rotor 20 can further drive the devices such as the plunger pump, and fan, to rotate, to realize the corresponding effect.

Preferably, the inlet 32 of the stator in the present application can be configured as grille openings. The grille openings are configured to be evenly distributed in the inlet area 301 of the stator 30, so that the fluid from the inlet 32 of the stator 30 can flow to two sides of the valve plate 12 of the split-type blade 10 in the inlet area 301 at the same time. The pressures of two sides of the split-type blade 10 are further balanced in the inlet area 301 of the stator 30, maximally reducing the abrasion between the split-type blade 10 and the rotor 20. Certainly, the outlet 33 of the stator 30 in the present application can also be configured as the grille openings that are evenly distributed in the outlet area 303 of the stator 30.

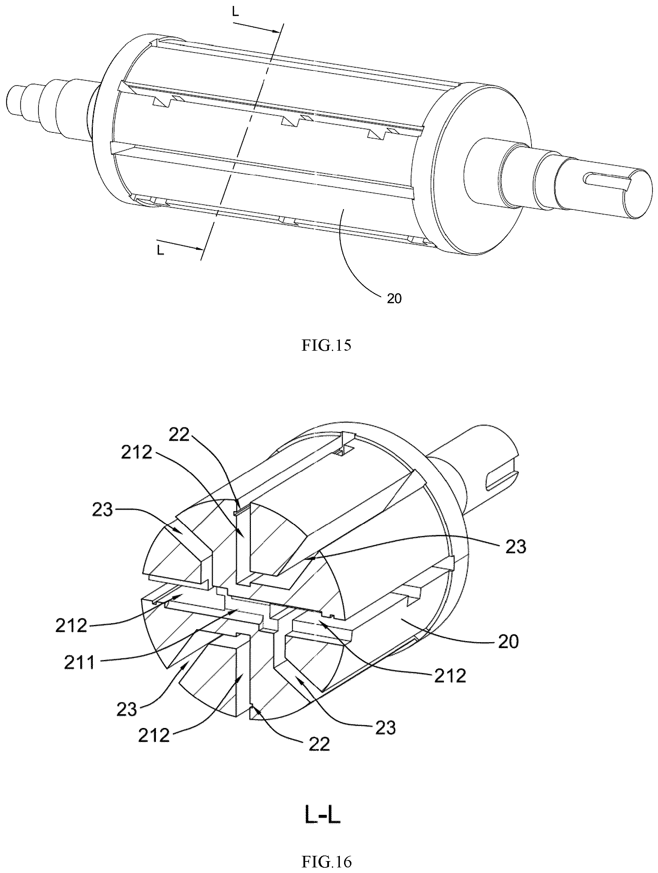

It should be noted that, in the above third transformation solution of the present application, the split-type blade 10 is provided with a reinforced rib 141 at the rear side surface of the valve plate 12. The reinforced rib 141 of the split-type blade 10 adopts an eccentric structure design. Therefore, the split-type blade 10 can slide in the radial direction relative to the rotor 20. The penetrating through hole 21 of the rotor 20 of the fluid driving device 1 is matched with the structure of the split-type blade 10. For example, the penetrating through hole 21 can be further includes an eccentric groove 213 corresponding to the reinforced rib 141. The eccentric groove 213 is extended backwards from the retracting groove 212, which is configured to slidably accommodate the reinforced rib 141, which is shown in FIG.15 and FIG.16 in detail, which won't be repeatedly described.

In the above second transformation solution of the present application, the reinforced rib 141 of the split-type blade 10 adopts a concentric structure design. Two reinforced ribs 141 of each pair are symmetrically disposed on front and rear sides of the valve plate 12. Therefore, the penetrating through hole 21 can further include a concentric groove corresponding to each pair of the reinforced ribs 141. The concentric groove is extended frontwards and backwards from the retracting groove 212 at the same time, which is configured to slidably accommodate the reinforced rib 141.

According to another aspect of the present application, the present application provides a fluid driving proportional mixer for mixing a first fluid and a second fluid in a predetermined ratio. In particular, as shown in FIG.17, the fluid driving proportional mixer includes a fluid driving device 1, a pump device 2 and a coupling 3. The coupling 3 is configure to connect the fluid driving device 1 to the pump device 2. When the first fluid (such as extinguishing water) flows in the fluid driving device 1, the fluid driving device 1 is firstly partly converser the pressure energy of the first fluid into the mechanical energy, and outputs the first fluid. Afterwards, the coupling 3 transmits the mechanical energy conversed by the fluid driving device 1 to the pump device 2. Finally, the pump device 2 converses the mechanical energy transmitted by the coupling 3 into the pressure energy of the second fluid (such as foam liquid), and outputs the second fluid, so that the first fluid and the second fluid can mixed in the predetermined ratio. It should be understood that, the predetermined ration mentioned in the present application can be but not limited to a ratio scope such as 1%, 3% or 6%. For example, when the predetermined ratio is configured as a ration scope of 3%, the predetermined ratio can be within the range of 3%-9%.

Preferably, the pump device 2 can be configured as but not limited to a reciprocating piston pump. The reciprocating piston pump can be reciprocated in the fluid driving device 1 driven by the coupling 3, so as to suck the second fluid and introduce the second fluid in the first fluid, so as to realize the mixture of the first fluid and the second fluid. It should be understood that the pump device 2 can also be configured as other types of pumps such as centrifugal pump, axial flow pump, partial flow pump or vortex pump.

According to the above embodiments of the present application, as shown in FIG.17, the fluid driving proportional mixer further includes a piping device 4. The piping device 4 includes a mixing pipe and a cleaning pipe. The mixing pipe communicates the outlet of the reciprocating piston pump with the outlet of the fluid driving device 1, which is configured to transmit the second fluid transmitted by the reciprocating piston pump to the outlet of the fluid driving device 1 through the mixing pipe. The second fluid transmitted by the reciprocating piston pump can be mixed with the first fluid transmitted by the fluid driving device 1 in a ratio. The cleaning pipe communicates the inlet of the reciprocating piston pump with the inlet of the fluid driving device 1, which is configured to transmit the first fluid from the inlet of the fluid driving device 1 to the inlet of the reciprocating piston pump, so that the reciprocating piston pump and the mixing pipe can be cleaned by the first fluid before or after the mixing.

It should be understood that, the mixing pipe and/or the cleaning pipe can be provided with various pipe auxiliary elements that meet the cleaning requirements such as manual ball valve, check valve, exhaust valve, pressure gauge, or instrument valve, which are not limited thereto. It won't be repeatedly described in the present application.

In summary, the fluid driving proportional mixer in the present application enjoys the following advantages:
1) a hydraulic driving without leakage and additional power, in which the present application adopts the extinguishing water for a direct drive, additional power like electric motor or diesel engine is not required, and there is no water leakage, which is different from the pelton turbine, so that a specific water discharging groove is not required, the proportional mixer can be in operate when the extinguishing pump operates normally, greatly increasing the reliability of the whole system;
2) a positive pressure injection without back pressure requirement, in which the piston pump can compress the foam liquid, so that the pressure of the injection point is a little bit higher than the water pressure, so that there is no back pressure requirement in this pressure range, which is suitable for any system and realizes a remote injection;
3) a strong liquid absorption capacity, so as to adapt to any extinguishing agent, in which the piston pump has a super strong self-absorption capacity, which can not only be applied to all foam extinguishing agent with high viscosity, solubility resistance and fluorine free, but also be applied to all water-based extinguishing agent, detergent and other various agents like wetting agent, in which the maximal viscosity can reach 1000cps;
4) a wide flow rate range, which is not influenced by the water pressure and back pressure, in which the fluid driving device 1 in the present application and the reciprocating piston pump adopt the volumetric type, so that the proportional mixer can be in operate in a certain working pressure range, having a relatively wide flow rate range and won't be influenced by the water pressure and back pressure;
5) flexible installation position without the requirement of direct pipe, in which the system can be directly mounted in the main water supply circuit with a plurality of mounting directions, so that the installation of the proportional mixer is more flexible and the outlet of the system is not required be configured as a direct pipe section; and
6) a rapid response speed, in which the reciprocating piston pump can be driven and mix the foam liquid and the water by sucking immediately when the water flows through the fluid driving device 1, realizing a real-time accurate mixing ratio.

Those skilled in the art should understand that, the above embodiment of the present application described above and shown in the figures are the exemplary embodiments, which are not intended to limit the present application. The purpose of the present application has already been to completely and effectively realized. The functions and structural principles of the present application have already been illustrated and explained in the embodiments. The implementation manner can be changed or modified without departing from the principle.

## Claims

1. A split-type blade (10) for serving as an accessory of a fluid driving device (1) and converting a pressure energy of a fluid into a mechanical energy, comprising a plurality of pushing rods (11), wherein the plurality of pushing rods (11) are configured to be slidably disposed in a rotor (20) of the fluid driving device (1) along a radial direction; and
two valve plates (12), wherein the two valve plates (12) are respectively mounted on two end portions of the pushing rod (11) in parallel, each of the two valve plates (12) extends outwards along the pushing rod (11) to form a split-type blade (10) with a penetrating pushing rod structure, so that when the split-type blade (10) drives the rotor (20) to rotate under an effect of the fluid, the pushing rod (11) of the split-type blade (10) is slid along the radial direction of the rotor (20) to ensure outer edge portions of the two valve plate (12) abuts against an inner wall of a stator (30) of the fluid driving device (1) all long the inner wall of the stator (30);
wherein the plurality of the pushing rods (11) are evenly spaced, and two end portions of each of the plurality of the pushing rods (11) are respectively connected to inner edge portions of the two valve plates (12);
each of the two valve plates (12) is provided with a matching groove (1220) in the inner edge portion, and each of the two end portions of each of the plurality of the pushing rods (11) is inserted in the matching groove (1220) of the two valve plates (12), to rigidly or flexibly connect each of plurality of the pushing rods (11) to the two valve plates (12);
further comprising a reinforcing element (14), wherein the reinforcing element (14) is correspondingly disposed on the two valve plates (12) at a connection portion with the plurality of the pushing rods (11) to reinforce a connection strength between the two valve plates (12) and the plurality of the pushing rods (11);
**characterized in that**, the reinforcing element (14) adopts two reinforced ribs (141) that are symmetrically disposed at a front side and a rear side of the matching groove (1220) of the two valve plates (12), and each of the two reinforced ribs (141) extends from the inner edge portions of the two valve plates (12) to the outer edge portions of the valve plates (12).

2. A split-type blade (10) for serving as an accessory of a fluid driving device (1) and converting a pressure energy of a fluid into a mechanical energy, comprising a plurality of pushing rods (11), wherein the plurality of pushing rods (11) are configured to be slidably disposed in a rotor (20) of the fluid driving device (1) along a radial direction; and
two valve plates (12), wherein the two valve plates (12) are respectively mounted on two end portions of the pushing rod (11) in parallel, each of the two valve plates (12) extends outwards along the pushing rod (11) to form a split-type blade (10) with a penetrating pushing rod structure, so that when the split-type blade (10) drives the rotor (20) to rotate under an effect of the fluid, the pushing rod (11) of the split-type blade (10) is slid along the radial direction of the rotor (20) to ensure outer edge portions of the two valve plate (12) abuts against an inner wall of a stator (30) of the fluid driving device (1) all long the inner wall of the stator (30);
wherein the plurality of the pushing rods (11) are evenly spaced, and two end portions of each of the plurality of the pushing rods (11) are respectively connected to inner edge portions of the two valve plates (12);
each of the two valve plates (12) is provided with a matching groove (1220) in the inner edge portion, and each of the two end portions of each of the plurality of the pushing rods (11) is inserted in the matching groove (1220) of the two valve plates (12), to rigidly or flexibly connect each of plurality of the pushing rods (11) to the two valve plates (12);
further comprising a reinforcing element (14), wherein the reinforcing element (14) is correspondingly disposed on the two valve plates (12) at a connection portion with the plurality of the pushing rods (11) to reinforce a connection strength between the two valve plates (12) and the plurality of the pushing rods (11);
**characterized in that** the reinforcing element (14) adopts a reinforced rib (141) that is correspondingly disposed at a rear side of the matching groove (1220) of the two valve plates (12), and the reinforced rib (141) extends from the inner edge portions of the two valve plates (12) to the outer edge portions of the two valve plates (12), the matching groove (1220) of the two valve plates (12) is backwards and eccentrically disposed at the inner edge portions of the two valve plates (12), so that the matching groove (1220) is positioned at a connection portion between the inner edge portions of the two valve plates (12) and the reinforced rib (141).

3. The split-type blade (10) according to claim 2, **characterized in that** a section area of a middle portion of each of the plurality of the pushing rods (11) is larger than a section area of the two end portions of each of the plurality of the pushing rods (11), and the two end portions of each of the plurality of the pushing rods (11) are integrated and respectively extend outwards from two ends of the middle portion of each of the plurality of the pushing rods (11) along a direction parallel to a center axis of the middle portion.

4. The split-type blade (10) according to any of claims 1-3, **characterized in that** the outer edge portions of the two valve plates (12) has an arc end surface (1210), and the arc end surface (1210) has a hyperbolic radius arc structure or single radius arc structure; an arc portion with a larger curvature radius of the arc end surface (1210) with the hyperbolic radius arc structure has a same curvature radius as an envelope curve of the inner wall of the stator (30) in a negative displacement area.

5. The split-type blade (10) according to any of claims 1-3, **characterized in** further comprising at least two elastic members (13), wherein each of the at least two elastic members (13) is correspondingly disposed on a middle end surface of the outer edge portions of the two valve plates (12), so that each of the at least two elastic members (13) is positioned between the two valve plate (12) and the stator (30) when the two valve plates (12) are positioned in a positive displacement area or a negative displacement area of the stator (30), thereby playing a sealing role; the pushing rod (11) is flexibly connected to the two valve plates (12) by a fastening member or a miniature spring; or the pushing rod (11) is rigidly connected to the two valve plates (12) through an interference fit.

6. A fluid driving device (1) for partly converting a pressure energy of a fluid into a mechanical energy, comprising:
at least one stator (30), wherein an inner chamber is provided in the at least one stator (30);
at least one rotor (20), wherein the at least one rotor (20) is rotatably provided in the corresponding inner chamber of the at least one stator (30); and
at least two split-type blades (10), wherein the at least two split-type blades (10) slidable in a radial direction are mounted in a corresponding one of the at least one rotor (20); and each of the at least two split-type blades (10) comprises
a plurality of pushing rods (11), wherein the plurality of pushing rods (11) are configured to be slidably disposed in the corresponding one of the at least one rotor (20) of the fluid driving device (1) along the radial direction; and
two valve plates (12), wherein the two valve plates (12) are respectively mounted on two end portions of the pushing rod (11) in parallel, each of the two valve plates (12) extends outwards along the pushing rod (11) to form a split-type blade (10) of the at least two split-type blades (10) with a penetrating pushing rod (11) structure, so that when the split-type blade (10) drives the corresponding one of the at least one rotor (20) to rotate under an effect of the fluid, the pushing rod (11) of the at least two split-type blades (10) is slid in the radial direction of the at least one rotor (20) to ensure an outer edge portion of each of the two valve plates (12) abuts against an inner wall of a corresponding one of the at least one stator (30) of the fluid driving device (1) all long the inner wall of the corresponding one of the at least one stator (30);
wherein the plurality of the pushing rods (11) are evenly spaced, and two end portions of each of the plurality of the pushing
rods (11) are respectively connected to inner edge portions of the two valve plates (12);
each of the two valve plates (12) is provided with a matching groove (1220) in the inner edge portion, and each of the two end portions of each of the plurality of the pushing rods (11) is inserted in the matching groove (1220) of the two valve plates (12), to rigidly or flexibly connect each of plurality of the pushing rods (11) to the two valve plates (12);
further comprising a reinforcing element (14), wherein the reinforcing element (14) is correspondingly disposed on the two valve plates (12) at a connection portion with the plurality of the pushing rods (11) to reinforce a connection strength between the two valve plates (12) and the plurality of the pushing rods (11);
**characterized in that**, the reinforcing element (14) adopts two reinforced ribs (141) that are symmetrically disposed at a front side and a rear side of the matching groove (1220) of the two valve plates (12), and each of the two reinforced ribs (141) extends from the inner edge portions of the two valve plates (12) to the outer edge portions of the valve plates (12).

7. The fluid driving device (1) according to claim 6, **characterized in that** the at least one rotor (20) is provided with at least two penetrating through holes (21), wherein each of the at least two penetrating through holes (21) extends along the radial direction of the at least one rotor (20) to penetrate the at least one rotor (20) for being slidably mounted in the split-type blade (10).

8. The fluid driving device (1) according to claim 7, **characterized in that** each of the at least two penetrating through holes (21) of the at least one rotor (20) comprises a sliding hole (211) and two retracting grooves (212), wherein the two retracting grooves (212) are symmetrically provided on a periphery of the at least one rotor (20), the sliding hole (211) extends from one retracting groove (212) of the two retracting grooves (212) to a second of the two retracting grooves (212), the pushing rod (11) of the split-type blade (10) is slidably mounted in the sliding hole (211) of the at least one rotor (20), and each of the two valve plates (12) is retractable mounted in the two retracting grooves (212) of the at least one rotor (20).

9. The fluid driving device (1) according to claim 8, **characterized in that** the at least one rotor (20) is further provided with at least two pairs of sealing grooves (22), two sealing grooves (22) in each pair of the at least two pairs of sealing grooves (22) are respectively disposed on sidewalls of the two retracting grooves (212) of the at least two penetrating through holes (21) of the rotor (20), the two sealing grooves (22) are configured to accommodate a sealing member to seal a gap between the two valve plates (12) and the at least one rotor (20) by the sealing member.

10. The fluid driving device (1) according to claim 9, **characterized in that** the split-type blade (10) further comprises a reinforcing element (14), wherein the reinforcing element (14) is correspondingly disposed on the two valve plates (12) at a connection portion with the pushing rod (11) to reinforce a connection strength between each of the two valve plates (12) and the pushing rod (11), the at least one rotor (20) further comprises an eccentric groove (213) backwards extending from a retracting groove (212) or a concentric groove frontwards extending from the retracting groove (212) for slidably accommodating the reinforcing element (14).

11. The fluid driving device (1) according to any of claims 6-9, **characterized in that** the at least one rotor (20) is provided with a plurality of balance holes (23), each of the plurality of balance holes (23) is positioned in the at least one rotor (20) and is in communication with a bottom of a corresponding retracting groove (212), when at least one of the two valve plates (12) of the split-type blade (10) is slid to an inlet area and an outlet area of the at least one stator (30), the balance hole (23) corresponding to the at least one of the two valve plates (12) is configured to introduce the fluid in a retracting grooves (212) to balance a pressure differential of the two valve plates (12) along the radial direction.

12. A fluid driving proportional mixer for mixing a first fluid and a second fluid, comprising:
a fluid driving device (1) for partly converting the pressure energy of the first fluid in a fluid driving device (1) into mechanical energy and outputting the first fluid;
a pump device (2) for converting the mechanical energy into pressure energy of the second fluid in operation and outputting the second fluid; and
a coupling (3) for transmitting the mechanical energy conversed by the fluid driving device (1) to the pump device (2) to drive the pump device (2) to operate, so that the first fluid outputted by the fluid driving device (1) is mixed with the second fluid outputted by the pump device (2) in a predetermined ratio in which the coupling (3) connects the fluid driving device (1) to the pump device (2),
wherein the fluid driving device (1) comprises:
at least one stator (30), wherein an inner chamber is provided in the at least one stator (30);
at least one rotor (20), wherein the at least one rotor (20) is rotatably provided in the corresponding inner chamber of the at least one stator (30); and
at least two split-type blades (10), wherein the at least two split-type blades (10) slidable in a radial direction are mounted in a corresponding one of the at least one rotor (20); and each of the at least two split-type blades (10) comprises:
a plurality of pushing rods (11), wherein the plurality of pushing rods (11) are configured to be slidably disposed in the corresponding one of the at least one rotor (20) of the fluid driving device (1) along the radial direction; and
two valve plates (12), wherein the two valve plates (12) are respectively mounted on two end portions of the pushing rod (11) in parallel, each of the two valve plates (12) extends outwards along the pushing rod (11) to form a split-type blade (10) of the at least two split-type blades (10) with a penetrating pushing rod (11) structure, so that when the split-type blade (10) drives the corresponding one of the at least one rotor (20) to rotate under an effect of the fluid, the
pushing rod (11) of the at least two split-type blades (10) is slid in the radial direction of the at least one rotor (20) to ensure an outer edge portion of each valve plate (12) abuts against an inner wall of a corresponding one of the at least one stator (30) of the fluid driving device (1) all long the inner wall of the corresponding one of the at least one stator (30);
wherein the plurality of the pushing rods (11) are evenly spaced, and two end portions of each of the plurality of the pushing rods (11) are respectively connected to inner edge portions of the two valve plates (12);
each of the two valve plates (12) is provided with a matching groove (1220) in the inner edge portion, and each of the two end portions of each of the plurality of the pushing rods (11) is inserted in the matching groove (1220) of the two valve plates (12), to rigidly or flexibly connect each of plurality of the pushing rods (11) to the two valve plates (12);
further comprising a reinforcing element (14), wherein the reinforcing element (14) is correspondingly disposed on the two valve plates (12) at a connection portion with the plurality of the pushing rods (11) to reinforce a connection strength between the two valve plates (12) and the plurality of the pushing rods (11);
**characterized in that**, the reinforcing element (14) adopts two reinforced ribs (141) that are symmetrically disposed at a front side and a rear side of the matching groove (1220) of the two valve plates (12), and each of the two reinforced ribs (141) extends from the inner edge portions of the two valve plates (12) to the outer edge portions of the valve plates (12).

## Patentansprüche

1. Geteilte Schaufel (10) zur Verwendung als Zubehör für eine Fluidantriebsvorrichtung (1) und zum Umwandeln einer Druckenergie eines Fluids in eine mechanische Energie, umfassend eine Vielzahl der Schubstangen (11), wobei die Vielzahl der Schubstangen (11) konfiguriert sind, um verschiebbar in einem Rotor (20) der Fluidantriebsvorrichtung (1) entlang einer Radialrichtung angeordnet zu sein; und
zwei Ventilplatten (12), wobei die beiden Ventilplatten (12) parallel an zwei Endabschnitten der Schubstange (11) montiert sind, wobei sich jede der beiden Ventilplatten (12) entlang der Schubstange (11) nach außen erstreckt, um eine geteilte Schaufel (10) mit einer durchgehenden Schubstangenstruktur zu bilden, so dass, wenn die geteilte Schaufel (10) den Rotor (20) unter Einwirkung des Fluids dreht, die Schubstange (11) der geteilten Schaufel (10) entlang der Radialrichtung des Rotors (20) gleitet, um sicherzustellen, dass die Außenkantenabschnitte der beiden Ventilplatten (12) ständig an einer Innenwand eines Stators (30) der Fluidantriebsvorrichtung (1) anliegen;
wobei die Vielzahl der Schubstangen (11) gleichmäßig beabstandet sind und zwei Endabschnitte von jeder der Vielzahl der Schubstangen (11) jeweils mit Innenkantenabschnitten der beiden Ventilplatten (12) verbunden sind;
wobei jede der beiden Ventilplatten (12) im Innenkantenabschnitt mit einer Passnut (1220) bereitgestellt ist und jeder der beiden Endabschnitte jeder der Vielzahl der Schubstangen (11) in die Passnut (1220) der beiden Ventilplatten (12) eingesetzt ist, um jede der Vielzahl der Schubstangen (11) starr oder flexibel mit den beiden Ventilplatten (12) zu verbinden;
weiter umfassend ein Verstärkungselement (14), wobei das Verstärkungselement (14) entsprechend an den beiden Ventilplatten (12) an einem Verbindungsabschnitt mit der Vielzahl der Schubstangen (11) angeordnet ist, um eine Verbindungsfestigkeit zwischen den beiden Ventilplatten (12) und der Vielzahl der Schubstangen (11) zu verstärken;
**dadurch gekennzeichnet, dass** das Verstärkungselement (14) zwei Verstärkungsrippen (141) verwendet, die symmetrisch an einer Vorderseite und einer Rückseite der Passnut (1220) der beiden Ventilplatten (12) angeordnet sind, und wobei sich jede der beiden Verstärkungsrippen (141) von den Innenkantenabschnitten der beiden Ventilplatten (12) zu den Außenkantenabschnitten der Ventilplatten (12) erstreckt.

2. Geteilte Schaufel (10) zur Verwendung als Zubehör für eine Fluidantriebsvorrichtung (1) und zum Umwandeln einer Druckenergie eines Fluids in eine mechanische Energie, umfassend eine Vielzahl der Schubstangen (11), wobei die Vielzahl der Schubstangen (11) konfiguriert sind, um verschiebbar in einem Rotor (20) der Fluidantriebsvorrichtung (1) entlang einer Radialrichtung angeordnet zu sein; und
zwei Ventilplatten (12), wobei die beiden Ventilplatten (12) parallel an zwei Endabschnitten der Schubstange (11) angebracht sind, wobei sich jede der beiden Ventilplatten (12) entlang der Schubstange (11) nach außen erstreckt, um eine geteilte Schaufel (10) mit einer durchgehenden Schubstangenstruktur zu bilden, so dass, wenn die geteilte Schaufel (10) den Rotor (20) unter Einwirkung des Fluids dreht, die Schubstange (11) der geteilten Schaufel (10) entlang der Radialrichtung des Rotors (20) gleitet, um sicherzustellen, dass Außenkantenabschnitte der beiden Ventilplatten (12) ständig an einer Innenwand eines Stators (30) der Fluidantriebsvorrichtung (1) anliegen;
wobei die Vielzahl der Schubstangen (11) gleichmäßig beabstandet sind und zwei Endabschnitte von jeder der Vielzahl der Schubstangen (11) jeweils mit Innenkantenabschnitten der beiden Ventilplatten (12) verbunden sind;
wobei jede der beiden Ventilplatten (12) im Innenkantenabschnitt mit einer Passnut (1220) bereitgestellt ist und jeder der beiden Endabschnitte jeder der Vielzahl der Schubstangen (11) in die Passnut (1220) der beiden Ventilplatten (12) eingesetzt ist, um jede der Vielzahl der Schubstangen (11) starr oder flexibel mit den beiden Ventilplatten (12) zu verbinden;
weiter umfassend ein Verstärkungselement (14), wobei das Verstärkungselement (14) entsprechend an den beiden Ventilplatten (12) an einem Verbindungsabschnitt mit der Vielzahl der Schubstangen (11) angeordnet ist, um eine Verbindungsfestigkeit zwischen den beiden Ventilplatten (12) und der Vielzahl der Schubstangen (11) zu verstärken;
**dadurch gekennzeichnet, dass** das Verstärkungselement (14) eine Verstärkungsrippe (141) verwendet, die entsprechend an einer Rückseite der Passnut (1220) der beiden Ventilplatten (12) angeordnet ist und sich von den Innenkantenabschnitten zu den Außenkantenabschnitten der beiden Ventilplatten (12) erstreckt, wobei die Passnut (1220) der beiden Ventilplatten (12) rückwärts versetzt und exzentrisch an den Innenkantenabschnitten der beiden Ventilplatten (12) angeordnet ist, so dass die Passnut (1220) an einem Verbindungsabschnitt zwischen den Innenkantenabschnitten der beiden Ventilplatten (12) und der Verstärkungsrippe (141) positioniert ist.

3. Geteilte Schaufel (10) nach Anspruch 2, **dadurch gekennzeichnet, dass** ein Querschnittsbereich eines Mittelabschnitts jeder der Vielzahl der Schubstangen (11) größer ist als ein Querschnittsbereich der beiden Endabschnitte jeder der Vielzahl der Schubstangen (11) und die beiden Endabschnitte jeder der Vielzahl der Schubstangen (11) integriert sind und sich jeweils von zwei Enden des Mittelabschnitts jeder der Vielzahl der Schubstangen (11) entlang einer Richtung parallel zu einer Mittelachse des Mittelabschnitts nach außen erstrecken.

4. Geteilte Schaufel (10) nach einem der Ansprüche 1 bis 3, **dadurch gekennzeichnet, dass** die Außenkantenabschnitte der beiden Ventilplatten (12) eine bogenförmige Endfläche (1210) aufweisen und die bogenförmige Endfläche (1210) eine hyperbolische Radiusbogenstruktur oder eine Einfachradiusbogenstruktur aufweist; wobei ein Bogenabschnitt mit einem größeren Krümmungsradius der bogenförmigen Endfläche (1210) mit hyperbolischer Radiusbogenstruktur einen gleichen Krümmungsradius wie eine Hüllkurve der Innenwand des Stators (30) in einem Negativverdrängungsbereich aufweist.

5. Geteilte Schaufel (10) nach einem der Ansprüche 1 bis 3, **dadurch gekennzeichnet, dass** sie weiter mindestens zwei Federelemente (13) umfasst, wobei jedes der mindestens zwei Federelemente (13) entsprechend auf einer mittleren Endfläche der Außenkantenabschnitte der beiden Ventilplatten (12) angeordnet ist, so dass jedes der mindestens zwei Federelemente (13) zwischen den beiden Ventilplatten (12) und dem Stator (30) positioniert ist, wenn sich die beiden Ventilplatten (12) in einem Positivverdrängungsbereich oder einem Negativverdrängungsbereich des Stators (30) befinden, wodurch eine abdichtende Wirkung erzielt wird; die Schubstange (11) flexibel durch ein Befestigungselement oder eine Miniaturfeder mit den beiden Ventilplatten (12) verbunden ist; oder die Schubstange (11) starr durch eine Presspassung mit den beiden Ventilplatten (12) verbunden ist.

6. Fluidantriebsvorrichtung (1) zur teilweisen Umwandlung einer Druckenergie eines Fluids in eine mechanische Energie, umfassend:
mindestens einen Stator (30), wobei in dem mindestens einen Stator (30) eine innere Kammer bereitgestellt ist;
mindestens einen Rotor (20), wobei der mindestens eine Rotor (20) drehbar in der entsprechenden Innenkammer des mindestens einen Stators (30) bereitgestellt ist; und
mindestens zwei geteilte Schaufeln (10), wobei die mindestens zwei geteilten Schaufeln (10) in radialer Richtung verschiebbar in einem entsprechenden Rotor des mindestens einen Rotors (20) montiert sind; und
jede der mindestens zwei geteilten Schaufeln (10) eine Vielzahl der Schubstangen (11) umfasst, wobei die Vielzahl der Schubstangen (11) so konfiguriert sind, dass sie in dem entsprechenden des mindestens einen Rotors (20) der Fluidantriebsvorrichtung (1) entlang der radialen Richtung verschiebbar angeordnet sind; und
zwei Ventilplatten (12), wobei die beiden Ventilplatten (12) parallel an zwei Endabschnitten der Schubstange (11) angebracht sind und sich jede der beiden Ventilplatten (12) entlang der Schubstange (11) nach außen erstreckt, um eine geteilte Schaufel (10) der mindestens zwei geteilten Schaufeln (10) mit einer Struktur aus durchgehenden Schubstangen (11) zu bilden, so dass, wenn die geteilte Schaufel (10) den entsprechenden mindestens einen Rotor (20) unter Einwirkung des Fluids dreht, die Schubstange (11) der mindestens zwei geteilten Schaufeln (10) in Radialrichtung des mindestens einen Rotors (20) gleitet, um sicherzustellen, dass ein Außenkantenabschnitt jeder der beiden Ventilplatten (12) ständig an einer Innenwand eines entsprechenden mindestens einen Stators (30) der Fluidantriebsvorrichtung (1) anliegt;
wobei die Vielzahl der Schubstangen (11) gleichmäßig beabstandet ist und zwei Endabschnitte von jeder der Vielzahl der Schubstangen (11) jeweils mit Innenkantenabschnitten der beiden Ventilplatten (12) verbunden sind;
wobei jede der beiden Ventilplatten (12) im Innenkantenabschnitt mit einer Passnut (1220) bereitgestellt ist und jeder der beiden Endabschnitte jeder der Vielzahl der Schubstangen (11) in die Passnut (1220) der beiden Ventilplatten (12) eingesetzt ist, um jede der Vielzahl der Schubstangen (11) starr oder flexibel mit den beiden Ventilplatten (12) zu verbinden;
weiter umfassend ein Verstärkungselement (14), wobei das Verstärkungselement (14) entsprechend an den beiden Ventilplatten (12) an einem Verbindungsabschnitt mit der Vielzahl der Schubstangen (11) angeordnet ist, um eine Verbindungsfestigkeit zwischen den beiden Ventilplatten (12) und der Vielzahl der Schubstangen (11) zu verstärken;
**dadurch gekennzeichnet, dass** das Verstärkungselement (14) zwei verstärkte Rippen (141) verwendet, die symmetrisch an einer Vorder- und einer Rückseite der passenden Nut (1220) der beiden Ventilplatten (12) angeordnet sind, und sich jede der beiden verstärkten Rippen (141) von den inneren Randabschnitten der beiden Ventilplatten (12) zu den äußeren Randabschnitten der Ventilplatten (12) erstreckt.

7. Fluidantriebsvorrichtung (1) nach Anspruch 6, **dadurch gekennzeichnet, dass** der mindestens eine Rotor (20) mit mindestens zwei durchgehenden Bohrungen (21) bereitgestellt ist, wobei sich jede der mindestens zwei durchgehenden Bohrungen (21) entlang der Radialrichtung des mindestens einen Rotors (20) erstreckt, um den mindestens einen Rotor (20) zu durchdringen, um verschiebbar in der geteilten Schaufel (10) montiert zu sein.

8. Fluidantriebsvorrichtung (1) nach Anspruch 7, **dadurch gekennzeichnet, dass** jede der mindestens zwei durchgehenden Bohrungen (21) des mindestens einen Rotors (20) ein Gleitloch (211) und zwei Rückzugsnuten (212) umfasst, wobei die zwei Rückzugsnuten (212) symmetrisch an einer Peripherie des mindestens einen Rotors (20) angebracht sind, sich das Gleitloch (211) von einer Rückzugsnut (212) der zwei Rückzugsnuten (212) zu einer zweiten der zwei Rückzugsnuten (212) erstreckt, die Schubstange (11) der geteilten Schaufel (10) verschiebbar im Gleitloch (211) des mindestens einen Rotors (20) montiert ist und jede der zwei Ventilplatten (12) versenkbar in den zwei Rückzugsnuten (212) des mindestens einen Rotors (20) montiert ist.

9. Fluidantriebsvorrichtung (1) nach Anspruch 8, **dadurch gekennzeichnet, dass** der mindestens eine Rotor (20) weiter mit mindestens zwei Paaren von Dichtungsnuten (22) bereitgestellt ist, zwei Dichtungsnuten (22) in jedem Paar der mindestens zwei Paaren von Dichtungsnuten (22) jeweils an Seitenwänden der zwei Rückzugsnuten (212) der mindestens zwei durchgehenden Bohrungen (21) des Rotors (20) angeordnet sind, die zwei Dichtungsnuten (22) konfiguriert sind, um ein Dichtungselement aufzunehmen, um einen Spalt zwischen den zwei Ventilplatten (12) und dem mindestens einen Rotor (20) durch das Dichtungselement abzudichten.

10. Fluidantriebsvorrichtung (1) nach Anspruch 9, **dadurch gekennzeichnet, dass** die geteilte Schaufel (10) weiter ein Verstärkungselement (14) umfasst, wobei das Verstärkungselement (14) entsprechend an den beiden Ventilplatten (12) an einem Verbindungsabschnitt mit der Schubstange (11) angeordnet ist, um eine Verbindungsfestigkeit zwischen jeder der beiden Ventilplatten (12) und der Schubstange (11) zu verstärken, der mindestens eine Rotor (20) weiter eine exzentrische Nut (213), die sich rückwärts von einer Rückzugsnut (212) erstreckt, oder eine konzentrische Nut, die sich vorwärts von der Rückzugsnut (212) erstreckt, zur verschiebbaren Aufnahme des Verstärkungselements (14) umfasst.

11. Fluidantriebsvorrichtung (1) nach einem der Ansprüche 6-9, **dadurch gekennzeichnet, dass** der mindestens eine Rotor (20) mit einer Vielzahl von Ausgleichsbohrungen (23) bereitgestellt ist, jede der Vielzahl von Ausgleichsbohrungen (23) in dem mindestens einen Rotor (20) positioniert ist und mit einem Boden einer entsprechenden Rückzugsnut (212) in Verbindung steht, und wenn mindestens eine der beiden Ventilplatten (12) der geteilten Schaufel (10) in einen Einlassbereich und einen Auslassbereich des mindestens einen Stators (30) gleitet, die Ausgleichsbohrung (23), die der mindestens einen der beiden Ventilplatten (12) entspricht, konfiguriert ist, um das Fluid in eine Rückzugsnut (212) einzuleiten, um einen Druckunterschied der beiden Ventilplatten (12) entlang der Radialrichtung auszugleichen.

12. Proportionalmischer mit Fluidantrieb zum Mischen eines ersten Fluids und eines zweiten Fluids, umfassend:
eine Fluidantriebsvorrichtung (1) zum teilweisen Umwandeln der Druckenergie des ersten Fluids in einer Fluidantriebsvorrichtung (1) in mechanische Energie und zum Ausgeben des ersten Fluids;
eine Pumpvorrichtung (2) zum Umwandeln der mechanischen Energie in Druckenergie des zweiten Fluids im Betrieb und zum Ausgeben des zweiten Fluids; und
eine Kupplung (3) zum Übertragen der von der Fluidantriebsvorrichtung (1) übertragenen mechanischen Energie auf die Pumpvorrichtung (2), um die Pumpvorrichtung (2) anzutreiben, so dass die von der Fluidantriebsvorrichtung (1) ausgegebene erste Flüssigkeit mit der von der Pumpvorrichtung (2) ausgegebenen zweiten Flüssigkeit in einem vorbestimmten Verhältnis gemischt wird, wobei die Kupplung (3) die Fluidantriebsvorrichtung (1) mit der Pumpvorrichtung (2) verbindet,
wobei die Fluidantriebsvorrichtung (1) Folgendes umfasst:
mindestens einen Stator (30), wobei in dem mindestens einen Stator (30) eine innere Kammer bereitgestellt ist;
mindestens einen Rotor (20), wobei der mindestens eine Rotor (20) drehbar in der entsprechenden Innenkammer des mindestens einen Stators (30) bereitgestellt ist; und
mindestens zwei geteilte Schaufeln (10), wobei die mindestens zwei geteilten Schaufeln (10) in radialer Richtung verschiebbar in einem entsprechenden des mindestens einen Rotors (20) montiert sind; und jede der mindestens zwei geteilten Schaufeln (10) Folgendes umfasst:
eine Vielzahl der Schubstangen (11), wobei die Vielzahl der Schubstangen (11) so konfiguriert ist, dass sie in dem entsprechenden des mindestens einen Rotors (20) der Fluidantriebsvorrichtung (1) entlang der radialen Richtung verschiebbar angeordnet sind; und
zwei Ventilplatten (12), wobei die beiden Ventilplatten (12) parallel an zwei Endabschnitten der Schubstange (11) angebracht sind und sich jede der beiden Ventilplatten (12) entlang der Schubstange (11) nach außen erstreckt, um eine geteilte Schaufel (10) der mindestens zwei geteilten Schaufeln (10) mit einer Struktur aus durchgehenden Schubstangen (11) zu bilden, so dass, wenn die geteilte Schaufel (10) den entsprechenden mindestens einen Rotor (20) unter Einwirkung des Fluids dreht, die
Schubstange (11) der mindestens zwei geteilten Schaufeln (10) in Radialrichtung des mindestens einen Rotors (20) gleitet, um sicherzustellen, dass ein Außenkantenabschnitt jeder Ventilplatte (12) ständig an einer Innenwand eines entsprechenden mindestens einen Stators (30) der Fluidantriebsvorrichtung (1) anliegt;
wobei die Vielzahl der Schubstangen (11) gleichmäßig beabstandet sind und zwei Endabschnitte jeder der mehreren Schubstangen (11) jeweils mit inneren Randabschnitten der beiden Ventilplatten (12) verbunden sind;
wobei jede der beiden Ventilplatten (12) im Innenkantenabschnitt mit einer Passnut (1220) bereitgestellt ist und jeder der beiden Endabschnitte jeder der Vielzahl der Schubstangen (11) in die Passnut (1220) der beiden Ventilplatten (12) eingesetzt ist, um jede der Vielzahl der Schubstangen (11) starr oder flexibel mit den beiden Ventilplatten (12) zu verbinden;
weiter umfassend ein Verstärkungselement (14), wobei das Verstärkungselement (14) entsprechend an den beiden Ventilplatten (12) an einem Verbindungsabschnitt mit der Vielzahl der Schubstangen (11) angeordnet ist, um eine Verbindungsfestigkeit zwischen den beiden Ventilplatten (12) und der Vielzahl der Schubstangen (11) zu verstärken;
**dadurch gekennzeichnet, dass** das Verstärkungselement (14) zwei Verstärkungsrippen (141) verwendet, die symmetrisch an einer Vorder- und einer Rückseite der Passnut (1220) der beiden Ventilplatten (12) angeordnet sind und sich jeweils von den Innenkantenabschnitten zu den Außenkantenabschnitten der Ventilplatten (12) erstrecken.

## Revendications

1. Pale de type fendu (10) pour servir d'accessoire à un dispositif d'entraînement de fluide (1) et convertir une énergie de pression d'un fluide en énergie mécanique, comprenant une pluralité de tiges de poussée (11), dans laquelle la pluralité de tiges de poussée (11) sont configurées pour être disposées de manière coulissante dans un rotor (20) du dispositif d'entraînement de fluide (1) le long d'une direction radiale ; et
deux plaques de soupape (12), dans laquelle les deux plaques de soupape (12) sont respectivement montées sur deux parties d'extrémité de la tige de poussée (11) en parallèle, chacune des deux plaques de soupape (12) s'étend vers l'extérieur le long de la tige de poussée (11) pour former une pale de type fendu (10) avec une structure de tige de poussée pénétrante, de sorte que lorsque la pale de type fendu (10) entraîne le rotor (20) en rotation sous un effet du fluide, la tige de poussée (11) de la pale de type fendu (10) est glissée le long de la direction radiale du rotor (20) pour garantir que des parties de bord externes des deux plaques de soupape (12) butent contre une paroi interne d'un stator (30) du dispositif d'entraînement de fluide (1) tout au long de la paroi interne du stator (30);
dans laquelle la pluralité des tiges de poussée (11) sont régulièrement espacées et deux parties d'extrémité de chacune de la pluralité des tiges de poussée (11) sont respectivement reliées à des parties de bord internes des deux plaques de soupape (12) ;
chacune des deux plaques de soupape (12) est dotée d'une rainure correspondante (1220) dans la partie de bord interne et chacune des deux parties d'extrémité de chacune de la pluralité des tiges de poussée (11) est insérée dans la rainure correspondante (1220) des deux plaques de soupape (12), pour relier de manière rigide ou flexible chaque tige de poussée de la pluralité des tiges de poussée (11) aux deux plaques de soupape (12) ;
comprenant en outre un élément de renforcement (14), dans laquelle l'élément de renforcement (14) est disposé de manière correspondante sur les deux plaques de soupape (12) au niveau d'une partie de liaison avec la pluralité des tiges de poussée (11) pour renforcer une résistance de liaison entre les deux plaques de soupape (12) et la pluralité des tiges de poussée (11) ;
**caractérisée en ce que** l'élément de renforcement (14) adopte deux nervures renforcées (141) qui sont disposées de manière symétrique au niveau d'un côté avant et d'un côté arrière de la rainure correspondante (1220) des deux plaques de soupape (12) et chacune des deux nervures renforcées (141) s'étend depuis les parties de bord internes des deux plaques de soupape (12) jusqu'aux parties de bord externes des plaques de soupape (12).

2. Pale de type fendu (10) pour servir d'accessoire à un dispositif d'entraînement de fluide (1) et convertir une énergie de pression d'un fluide en énergie mécanique, comprenant une pluralité de tiges de poussée (11), dans laquelle la pluralité de tiges de poussée (11) sont configurées pour être disposées de manière coulissante dans un rotor (20) du dispositif d'entraînement de fluide (1) le long d'une direction radiale ; et
deux plaques de soupape (12), dans laquelle les deux plaques de soupape (12) sont respectivement montées sur deux parties d'extrémité de la tige de poussée (11) en parallèle, chacune des deux plaques de soupape (12) s'étend vers l'extérieur le long de la tige de poussée (11) pour former une pale de type fendu (10) avec une structure de tige de poussée pénétrante, de sorte que, lorsque la pale de type fendu (10) entraîne le rotor (20) en rotation sous un effet du fluide, la tige de poussée (11) de la pale de type fendu (10) est glissée le long de la direction radiale du rotor (20) pour garantir que des parties de bord externes des deux plaques de soupape (12) butent contre une paroi interne d'un stator (30) du dispositif d'entraînement de fluide (1) tout au long de la paroi interne du stator (30);
dans laquelle la pluralité des tiges de poussée (11) sont régulièrement espacées et deux parties d'extrémité de chaque tige de poussée de la pluralité des tiges de poussée (11) sont respectivement reliées à des parties de bord internes des deux plaques de soupape (12) ;
chacune des deux plaques de soupape (12) est dotée d'une rainure correspondante (1220) dans la partie de bord interne et chacune des deux parties d'extrémité de chacune de la pluralité des tiges de poussée (11) est insérée dans la rainure correspondante (1220) des deux plaques de soupape (12), pour relier de manière rigide ou flexible chacune de la pluralité des tiges de poussée (11) aux deux plaques de soupape (12) ;
comprenant en outre un élément de renforcement (14), dans laquelle l'élément de renforcement (14) est disposé de manière correspondante sur les deux plaques de soupape (12) au niveau d'une partie de liaison avec la pluralité des tiges de poussée (11) pour renforcer une résistance de liaison entre les deux plaques de soupape (12) et la pluralité des tiges de poussée (11) ;
**caractérisée en ce que** l'élément de renforcement (14) adopte une nervure renforcée (141) qui est disposée de manière correspondante au niveau d'un côté arrière de la rainure correspondante (1220) des deux plaques de soupape (12) et la nervure renforcée (141) s'étend depuis les parties de bord internes des deux plaques de soupape (12) jusqu'aux parties de bord externes des deux plaques de soupape (12), la rainure correspondante (1220) des deux plaques de soupape (12) est disposée vers l'arrière et de manière excentrique au niveau des parties de bord internes des deux plaques de soupape (12), de sorte que la rainure correspondante (1220) soit positionnée au niveau d'une partie de liaison entre les parties de bord internes des deux plaques de soupape (12) et la nervure renforcée (141).

3. Pale de type fendu (10) selon la revendication 2, **caractérisée en ce qu'**une zone de section d'une partie médiane de chacune de la pluralité de tiges de poussée (11) est plus grande qu'une zone de section des deux parties d'extrémité de chacune de la pluralité de tiges de poussée (11) et les deux parties d'extrémité de chacune de la pluralité de tiges de poussée (11) sont intégrées et s'étendent respectivement vers l'extérieur à partir de deux extrémités de la partie médiane de chacune de la pluralité de tiges de poussée (11) le long d'une direction parallèle à un axe central de la partie médiane.

4. Pale de type fendu (10) selon l'une quelconque des revendications 1-3, **caractérisée en ce que** les parties de bord externes des deux plaques de soupape (12) présentent une surface d'extrémité d'arc (1210) et la surface d'extrémité d'arc (1210) présente une structure d'arc à rayon hyperbolique ou une structure d'arc à rayon unique ; une partie d'arc avec un rayon de courbure plus grand de la surface d'extrémité d'arc (1210) avec la structure d'arc à rayon hyperbolique présente un même rayon de courbure qu'une courbe d'enveloppe de la paroi interne du stator (30) dans une zone de déplacement négatif.

5. Pale de type fendu (10) selon l'une quelconque des revendications 1-3, **caractérisée en ce qu'**elle comprend en outre au moins deux éléments élastiques (13), dans laquelle chacun des deux éléments élastiques (13) est disposé de manière correspondante sur une surface d'extrémité médiane des parties de bord externes des deux plaques de soupape (12), de sorte que chacun des au moins deux éléments élastiques (13) est positionné entre les deux plaques de soupape (12) et le stator (30) lorsque les deux plaques de soupape (12) sont positionnées dans une zone de déplacement positif ou une zone de déplacement négatif du stator (30), ce qui permet de jouer un rôle d'étanchéité ; la tige de poussée (11) est reliée de manière flexible aux deux plaques de soupape (12) par un élément de fixation ou un ressort miniature ; ou la tige de poussée (11) est reliée de manière rigide aux deux plaques de soupape (12) par un ajustement serré.

6. Dispositif d'entraînement de fluide (1) pour convertir partiellement une énergie de pression d'un fluide en une énergie mécanique, comprenant :
au moins un stator (30), dans lequel une chambre interne est ménagée dans l'au moins un stator (30) ;
au moins un rotor (20), dans lequel l'au moins un rotor (20) est ménagé en rotation dans la chambre interne correspondante de l'au moins un stator (30) ; et
au moins deux pales de type fendu (10), dans lequel les au moins deux pales de type fendu (10) pouvant coulisser dans une direction radiale sont montées dans un rotor correspondant de l'au moins un rotor (20) ; et chacune des au moins deux pales de type fendu (10) comprend
une pluralité de tiges de poussée (11), dans lequel la pluralité de tiges de poussée (11) est configurée pour être disposée de manière coulissante dans le rotor correspondant de l'au moins un rotor (20) du dispositif d'entraînement de fluide (1) le long de la direction radiale ; et
deux plaques de soupape (12), dans lequel les deux plaques de soupape (12) sont respectivement montées sur deux parties d'extrémité de la tige de poussée (11) en parallèle, chacune des deux plaques de soupape (12) s'étend vers l'extérieur le long de la tige de poussée (11) pour former une pale de type fendu (10) des au moins deux pales de type fendu (10) avec une structure de tige de poussée pénétrante (11), de sorte que, lorsque la pale de type fendu (10) entraîne le rotor correspondant de l'au moins un rotor (20) en rotation sous un effet du fluide, la tige de poussée (11) des au moins deux pales de type fendu (10) est glissée dans la direction radiale de l'au moins un rotor (20) pour garantir qu'une partie de bord externe de chacune des deux plaques de soupape (12) bute contre une paroi interne d'un stator correspondant de l'au moins un stator (30) du dispositif d'entraînement de fluide (1) tout au long de la paroi interne du stator correspondant de l'au moins un stator (30) ;
dans lequel la pluralité des tiges de poussée (11) sont régulièrement espacées et deux parties d'extrémité de chacune de la pluralité des tiges de poussée (11) sont respectivement reliées à des parties de bord internes des deux plaques de soupape (12) ;
chacune des deux plaques de soupape (12) est dotée d'une rainure correspondante (1220) dans la partie de bord interne et chacune des deux parties d'extrémité de chacune de la pluralité des tiges de poussée (11) est insérée dans la rainure correspondante (1220) des deux plaques de soupape (12), pour relier de manière rigide ou flexible chacune de la pluralité des tiges de poussée (11) aux deux plaques de soupape (12) ;
comprenant en outre un élément de renforcement (14), dans lequel l'élément de renforcement (14) est disposé de manière correspondante sur les deux plaques de soupape (12) au niveau d'une partie de liaison avec la pluralité des tiges de poussée (11) pour renforcer une résistance de liaison entre les deux plaques de soupape (12) et la pluralité des tiges de poussée (11) ;
**caractérisé en ce que** l'élément de renforcement (14) adopte deux nervures renforcées (141) qui sont disposées symétriquement au niveau d'un côté avant et d'un côté arrière de la rainure correspondante (1220) des deux plaques de soupape (12) et chacune des deux nervures renforcées (141) s'étend depuis les parties de bord internes des deux plaques de soupape (12) jusqu'aux parties de bord externes des plaques de soupape (12).

7. Dispositif d'entraînement de fluide (1) selon la revendication 6, **caractérisé en ce que** l'au moins un rotor (20) est doté d'au moins deux trous traversants pénétrants (21), dans lequel chacun des au moins deux trous traversants pénétrants (21) s'étend le long de la direction radiale de l'au moins un rotor (20) pour pénétrer l'au moins un rotor (20) afin d'être monté de manière coulissante dans la pale de type fendu (10).

8. Dispositif d'entraînement de fluide (1) selon la revendication 7, **caractérisé en ce que** chacun des au moins deux trous traversants pénétrants (21) de l'au moins un rotor (20) comprend un trou coulissant (211) et deux rainures de rétraction (212), dans lequel les deux rainures de rétraction (212) sont ménagées de manière symétrique sur une périphérie de l'au moins un rotor (20), le trou coulissant (211) s'étend depuis une rainure de rétraction (212) des deux rainures de rétraction (212) jusqu'à une seconde des deux rainures de rétraction (212), la tige de poussée (11) de la pale de type fendu (10) est montée coulissante dans le trou coulissant (211) de l'au moins un rotor (20) et chacune des deux plaques de soupape (12) est montée rétractable dans les deux rainures de rétraction (212) de l'au moins un rotor (20).

9. Dispositif d'entraînement de fluide (1) selon la revendication 8, **caractérisé en ce que** l'au moins un rotor (20) est en outre doté d'au moins deux paires de rainures d'étanchéité (22), deux rainures d'étanchéité (22) dans chaque paire des au moins deux paires de rainures d'étanchéité (22) sont respectivement disposées sur des parois latérales des deux rainures de rétraction (212) des au moins deux trous traversants pénétrants (21) du rotor (20), les deux rainures d'étanchéité (22) sont configurées pour recevoir un élément d'étanchéité pour sceller un espace entre les deux plaques de soupape (12) et l'au moins un rotor (20) par l'élément d'étanchéité.

10. Dispositif d'entraînement de fluide (1) selon la revendication 9, **caractérisé en ce que** la pale de type fendu (10) comprend en outre un élément de renforcement (14), dans lequel l'élément de renforcement (14) est disposé de manière correspondante sur les deux plaques de soupape (12) au niveau d'une partie de liaison avec la tige de poussée (11) pour renforcer une résistance de liaison entre chacune des deux plaques de soupape (12) et la tige de poussée (11), l'au moins un rotor (20) comprend en outre une rainure excentrique (213) s'étendant vers l'arrière depuis une rainure de rétraction (212) ou une rainure concentrique vers l'avant s'étendant depuis la rainure de rétraction (212) pour loger de manière coulissante l'élément de renforcement (14).

11. Dispositif d'entraînement de fluide (1) selon l'une quelconque des revendications 6-9, **caractérisé en ce que** l'au moins un rotor (20) est doté d'une pluralité de trous d'équilibrage (23), chacun de la pluralité de trous d'équilibrage (23) est positionné dans l'au moins un rotor (20) et est en communication avec un fond d'une rainure de rétraction correspondante (212), lorsqu'au moins une des deux plaques de soupape (12) de la pale de type fendu (10) est glissée vers une zone d'entrée et une zone de sortie de l'au moins un stator (30), le trou d'équilibrage (23) correspondant à l'au moins une des deux plaques de soupape (12) est configuré pour introduire le fluide dans une rainure de rétraction (212) pour équilibrer un différentiel de pression des deux plaques de soupape (12) le long de la direction radiale.

12. Mélangeur proportionnel à entraînement de fluide pour mélanger un premier fluide et un second fluide, comprenant :
un dispositif d'entraînement de fluide (1) pour convertir partiellement l'énergie de pression du premier fluide dans un dispositif d'entraînement de fluide (1) en énergie mécanique et délivrer le premier fluide ;
un dispositif de pompe (2) pour convertir l'énergie mécanique en énergie de pression du second fluide en fonctionnement et délivrer le second fluide ; et
un couplage (3) pour transmettre l'énergie mécanique convertie par le dispositif d'entraînement de fluide (1) au dispositif de pompe (2) pour entraîner le dispositif de pompe (2) à fonctionner, de sorte que le premier fluide délivré par le dispositif d'entraînement de fluide (1) est mélangé au second fluide délivré par le dispositif de pompe (2) dans un rapport prédéterminé dans lequel le couplage (3) relie le dispositif d'entraînement de fluide (1) au dispositif de pompe (2),
dans lequel le dispositif d'entraînement de fluide (1) comprend :
au moins un stator (30), dans lequel une chambre interne est disposée dans l'au moins un stator (30) ;
au moins un rotor (20), dans lequel l'au moins un rotor (20) est disposé en rotation dans la chambre interne correspondante de l'au moins un stator (30) ; et
au moins deux pales de type fendu (10), dans lequel les au moins deux pales de type fendu (10) pouvant coulisser dans une direction radiale sont montées sur un correspondant de l'au moins un rotor (20) ; et chacune des au moins deux pales de type fendu (10) comprend :
une pluralité de tiges de poussée (11), dans lequel la pluralité de tiges de poussée (11) sont configurées pour être disposées de manière coulissante dans le correspondant de l'au moins un rotor (20) du dispositif d'entraînement de fluide (1) le long de la direction radiale ; et
deux plaques de soupape (12), dans lequel les deux plaques de soupape (12) sont respectivement montées sur deux parties d'extrémité de la tige de poussée (11) en parallèle, chacune des deux plaques de soupape (12) s'étend vers l'extérieur le long de la tige de poussée (11) pour former une pale de type fendu (10) des au moins deux pales de type fendu (10) avec une structure de tige de poussée pénétrante (11), de sorte que, lorsque la pale de type fendu (10) entraîne le correspondant de l'au moins un rotor (20) en rotation sous l'effet du fluide,
la tige de poussée (11) des au moins deux pales de type fendu (10) est glissée dans la direction radiale de l'au moins un rotor (20) pour garantir qu'une partie de bord externe de chaque plaque de soupape (12) bute contre une paroi interne d'un correspondant de l'au moins un stator (30) du dispositif d'entraînement de fluide (1) tout le long de la paroi interne du stator correspondant de l'au moins un stator (30) ;
dans lequel la pluralité des tiges de poussée (11) sont régulièrement espacées et deux parties d'extrémité de chacune de la pluralité des tiges de poussée (11) sont respectivement reliées à des parties de bord internes des deux plaques de soupape (12) ;
chacune des deux plaques de soupape (12) est dotée d'une rainure correspondante (1220) dans la partie de bord interne et chacune des deux parties d'extrémité de chacune de la pluralité des tiges de poussée (11) est insérée dans la rainure correspondante (1220) des deux plaques de soupape (12), pour relier de manière rigide ou flexible chacune de la pluralité des tiges de poussée (11) aux deux plaques de soupape (12) ;
comprenant en outre un élément de renforcement (14), dans lequel l'élément de renforcement (14) est disposé de manière correspondante sur les deux plaques de soupape (12) au niveau d'une partie de liaison avec la pluralité des tiges de poussée (11) pour renforcer une résistance de liaison entre les deux plaques de soupape (12) et la pluralité des tiges de poussée (11) ;
**caractérisé en ce que** l'élément de renforcement (14) adopte deux nervures renforcées (141) qui sont disposées de manière symétrique au niveau d'un côté avant et d'un côté arrière de la rainure correspondante (1220) des deux plaques de soupape (12) et chacune des deux nervures renforcées (141) s'étend depuis les parties de bord internes des deux plaques de soupape (12) jusqu'aux parties de bord externes des plaques de soupape (12).
